(19) Europäisches Patentamt
European Patent Office
Office européen des brevets

(11) **EP 4 300 369 A1**

(12) **EUROPEAN PATENT APPLICATION**

(43) Date of publication:
**03.01.2024  Bulletin 2024/01**

(21) Application number: **23182435.0**

(22) Date of filing: **29.06.2023**

(51) International Patent Classification (IPC):
**G06N 3/063** $^{(2023.01)}$     **G06N 3/045** $^{(2023.01)}$
**G06N 3/0464** $^{(2023.01)}$     **G06N 3/048** $^{(2023.01)}$

(52) Cooperative Patent Classification (CPC):
**G06N 3/063;** G06N 3/045; G06N 3/0464;
G06N 3/048

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.06.2022  GB 202209584**

(71) Applicant: **Imagination Technologies Limited
Kings Langley, Hertfordshire WD4 8LZ (GB)**

(72) Inventors:
• **AHMADI, Aria
Kings Langley, WD4 8LZ (GB)**
• **DIKICI, Cagatay
Kings Langley, WD4 8LZ (GB)**
• **CHARNAY, Clement
Kings Langley, WD4 8LZ (GB)**
• **ROGERS, Jason
Kings Langley, WD4 8LZ (GB)**

(74) Representative: **Slingsby Partners LLP
1 Kingsway
London WC2B 6AN (GB)**

(54) **METHODS AND SYSTEMS FOR EXECUTING A NEURAL NETWORK ON A NEURAL NETWORK ACCELERATOR**

(57)     Methods of dividing a neural network comprising one or more layers into chunks of operations executable in a hardware pass of hardware configurable to execute a neural network. The one or more layers of the neural network are divisible into one or more layer groups that comprise a sequence of layers executable in the same hardware pass of the hardware. Each layer group is divisible into one or more chunks of operations executable in a hardware pass of the hardware. The one or more chunks for a layer group are defined by one or more split parameters. The method includes: obtaining a layer group loss function that represents a performance metric associated with executing a layer group on the hardware as a function of the one or more split parameters and one or more neural network architecture parameters for the layer group; generating a neural network loss function based on the layer group loss function that represents the performance metric associated with executing the neural network on the hardware; and selecting the split parameters for the one or more layer groups that minimize the neural network loss function under one or more constraints imposed by the hardware.

FIG. 6

EP 4 300 369 A1

**Description**

CROSS-REFERENCE TO RELATED APPLICATION

This application claims priority from UK Patent Application No. 2209584.8 filed on 29 June 2022, which is herein incorporated by reference in its entirety.

TECHNICAL FIELD

This application is directed to methods and systems for executing a neural network on a neural network accelerator.

BACKGROUND

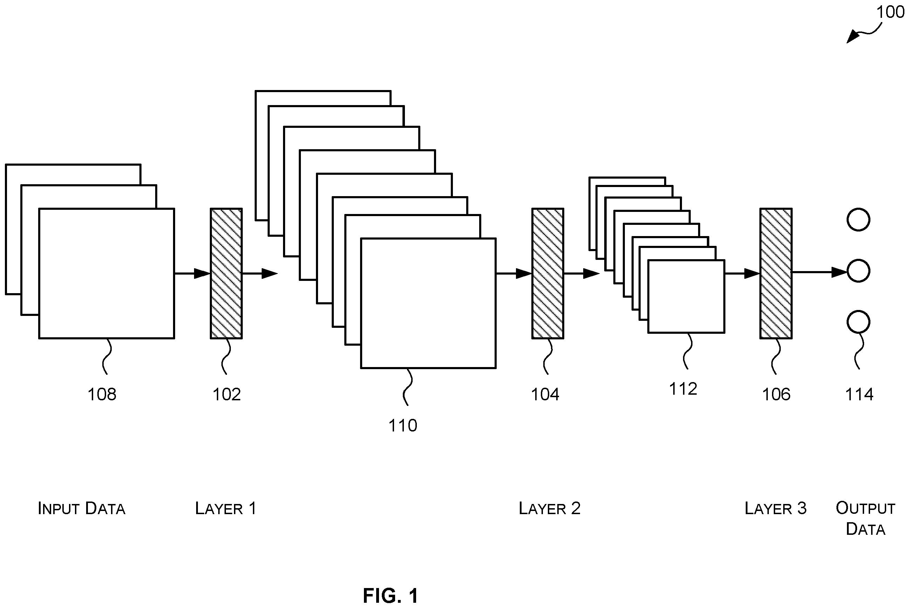

A Deep Neural Network (DNN) is a form of artificial neural network comprising a plurality of interconnected layers that can be used for machine learning applications. In particular, a DNN can be used in signal processing applications, including, but not limited to, image processing and computer vision applications. FIG. 1 illustrates an example DNN 100 that comprises a plurality of layers 102, 104, 106. Each layer 102, 104, 106 receives input data, and processes the input data in accordance with the layer to produce output data. The output data is either provided to another layer as the input data or is output as the final output data of the DNN. For example, in the DNN 100 of FIG. 1, the first layer 102 receives the original input data 108 to the DNN 100 and processes the input data in accordance with the first layer 102 to produce output data 110. The output data 110 of the first layer 102 becomes the input data to the second layer 104, and the second layer 104 processes the input data 110 in accordance with the second layer 104 to produce output data 112. The output data 112 of the second layer 104 becomes the input data to the third layer 106, and the third layer 106 processes the input data 112 in accordance with the third layer 106 to produce output data 114. The output data 114 of the third layer 106 is then output as the final output data of the DNN. Where the DNN is used for classification, the output data 114 may be a vector of length $A$, wherein $A$ is the number of classes and each value in the vector represents the probability of a certain class.

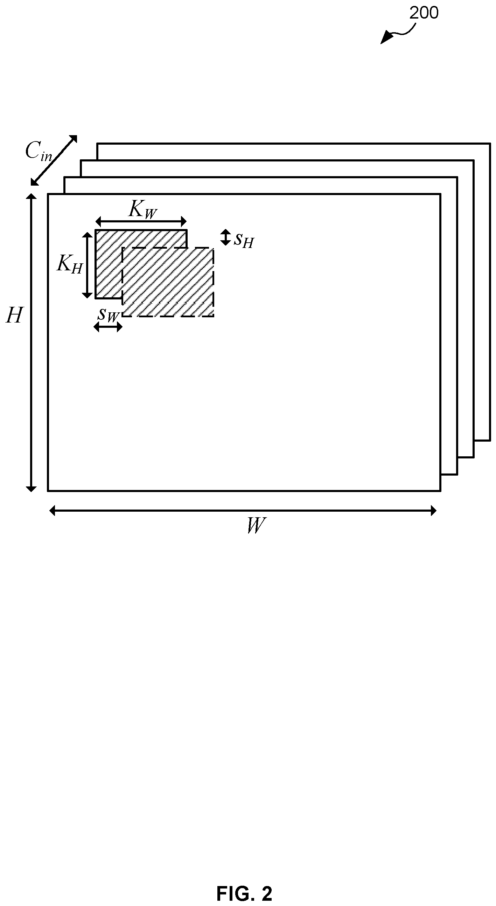

The data 200 input to and output from a layer of a DNN can be described as a tensor. As is known to those of skill in the art, a tensor is a generalization of vectors and matrices and can be described as an n-dimensional array. A vector is a one-dimensional tensor, and a matrix is a two-dimensional tensor. The tensors in a DNN are often, but are not necessarily, three-dimensional. Reference is made to FIG. 2 which illustrates an example three-dimensional (3D) tensor 200. The 3D tensor 200 may be described as $C_{in}$ channels of data (or P planes of data), where each channel (or plane) has a dimension $W \times H$. An element of a tensor may be referred to as a tensel, akin to how an element of a picture is referred to as a pixel.

The processing that is performed on the input data to a layer depends on the type of layer. For example, each layer of a DNN may be one of a plurality of different types. Example DNN layer types include, but are not limited to, a convolutional layer, an activation layer, a normalisation layer, a pooling layer, and an element-wise operations layer. It will be evident to a person of skill in the art that these are example DNN layer types and that this is not an exhaustive list and there may be other DNN layer types.

A convolutional layer convolves the input data with weights associated with the layer. Specifically, each convolutional layer is associated with a plurality of weights $k_0 \ldots k_g$, which may also be referred to as filter weights or coefficients. The weights are grouped to form, or define, one or more filters or kernels, and each filter may be associated with an offset bias *bias*. Each filter may have a dimension $K_W \times K_H \times C_{in}$ (i.e. each filter may comprise a set of $K_W \times K_H \times C_{in}$ weights $k$) and may be applied to the input data according to a convolution operation across steps $s_W$ and $s_H$ in the $W$ and $H$ directions as shown in FIG. 2. The step sizes $s_W$ and $s_H$ may be referred to as the strides of the convolution. The number of filters and/or the number of weights per filter may vary between convolutional layers. A convolutional neural network (CNN), which is a specific type of DNN that is effective for image recognition and classification, generally comprises a plurality of convolutional layers.

An activation layer, which typically, but not necessarily follows a convolutional layer, applies one or more activation functions to the input data to the layer. An activation function receives an input tensor and performs a certain non-linear mathematical operation on each value or element in the input tensor. In other words, the activation function operates on each value or element in the input tensor separately. In some examples, an activation layer may act as rectified linear unit (ReLU) by implementing an ReLU function (i.e., $f(x) = max(0,x)$) or a Parametric Rectified Linear Unit (PReLU) by implementing a PReLU function.

A normalisation layer is configured to perform a normalising function, such as a Local Response Normalisation (LRN) function on the input data.

A pooling layer, which is typically, but not necessarily inserted between successive convolutional layers, performs a pooling function, such as a max, min or average function, to summarise subsets of the input data. The purpose of a pooling layer is thus to reduce the spatial size of the representation to reduce the number of parameters and computation in the network, and hence to also control overfitting.

An element-wise operations layer is configured to receive input data (e.g., an input tensor) and perform an element-wise operation on the input data (e.g., input tensor), optionally with another data set (e.g., another tensor). Performing an element-wise operation on the input data (e.g., input tensor) means performing the same operation on each element of the input data/tensor (e.g., each input data value or each tensel). Element-wise operations which may be performed on the input data include, but are not limited to, add, multiply, maximum, and minimum.

Accordingly, each layer of a DNN receives input data values (e.g., an input tensor) and generates output data values (e.g., an output tensor); and some layers (such as, but not limited to, convolutional layers) also receive weights and/or biases.

DNNs are often computationally complex to implement or execute. Accordingly, neural network accelerators have been developed that allow neural networks, including DNNs, to be executed or realised in an efficient manner (e.g., in a manner that requires less silicon area or less processing power). It is desirable to be able to execute DNNs as efficiently as possible on neural network accelerators (or other hardware configurable to execute a DNN).

The embodiments described below are provided by way of example only and are not limiting of implementations which solve any or all of the disadvantages of known methods for executing a DNN on a neural network accelerator (or other hardware configurable to execute a DNN).

SUMMARY

This summary is provided to introduce a selection of concepts that are further described below in the detailed description. This summary is not intended to identify key features or essential features of the claimed subject matter, nor is it intended to be used to limit the scope of the claimed subject matter.

Described herein are methods of dividing a neural network comprising one or more layers into chunks of operations executable in a hardware pass of hardware configurable to execute a neural network. The one or more layers of the neural network are divisible into one or more layer groups wherein each layer group comprise a sequence of layers executable in a hardware pass of the hardware. Each layer group is divisible into one or more chunks of operations executable in a hardware pass of the hardware. The one or more chunks for a layer group are defined by one or more split parameters. The method includes: obtaining a layer group loss function that represents a performance metric associated with executing a layer group on the hardware as a function of the one or more split parameters and one or more neural network architecture parameters for the layer group; generating a neural network loss function based on the layer group loss function that represents the performance metric associated with executing the neural network on the hardware; and selecting the split parameters for the one or more layer groups that minimize the neural network loss function under one or more constraints imposed by the hardware.

A first aspect provides a computer-implemented method of dividing a neural network comprising one or more layers into chunks of operations executable in a hardware pass of hardware configurable to execute a neural network, the one or more layers of the neural network being divisible into one or more layer groups that comprise a sequence of layers executable in a same hardware pass of the hardware, each layer group being divisible into one or more chunks of operations executable in a hardware pass of the hardware, the one or more chunks for a layer group defined by one or more split parameters, the method comprising: obtaining a layer group loss function that represents a performance metric associated with executing a layer group on the hardware as a function of the one or more split parameters and one or more neural network architecture parameters for the layer group; generating a neural network loss function based on the layer group loss function that represents the performance metric associated with executing the neural network on the hardware; and selecting the split parameters for the one or more layer groups that minimize the neural network loss function under one or more constraints imposed by the hardware.

The performance metric associated with executing a layer group on the hardware may be a number of cycles to execute the layer group on the hardware.

The layer group loss function may be a ratio of (i) a total number of operations to execute the layer group on the hardware, and (ii) a maximum attainable number of operations performed by the hardware per cycle for the layer group.

The maximum attainable number of operations performed by the hardware per cycle for a layer group may be dependent on whether the layer group is bandwidth bound or computation bound, and the determination of whether the layer group is bandwidth bound or computation bound may be based on a roofline model.

The roofline model may plot operation performance of the hardware as function of a maximum attainable peak operations performed by the hardware per cycle, a peak bandwidth rate for the hardware, and arithmetic intensity for a layer group, wherein the arithmetic intensity for a layer group may be a total number of operations for the layer group divided by a total number of bytes transferred into or out of the hardware for the layer group.

Executing a layer group on the hardware may comprise performing one or more different types of operations on an input tensor and the total number of operations to execute the layer group may comprise a sum of a number of each of the one or more different types of operations to execute the layer group.

The performance metric associated with executing a layer group on the hardware may be a total bandwidth to transfer data into and out of the hardware to execute the layer group.

The total bandwidth to transfer data into and out of the hardware to execute a layer group may be a sum of a bandwidth associated with transferring each of one or more data elements into and out of the hardware to execute the layer group.

Each layer group may receive one or more inputs, and the one or more split parameters for a layer group may comprise at least one parameter that defines a split of one of the one or more of the inputs in a dimension of that input.

The one or more split parameters for a layer group may comprise at least two parameters that define a split of one of the one or more inputs in a dimension of that input, and a parameter that defines an order that the splits of the one or more inputs are processed.

Executing a layer group on the hardware may comprise performing one or more operations on an input tensor, and the one or more inputs comprises the input tensor.

The hardware may comprise one or more buffers for storing data input to and/or generated by the hardware, and the one or more constraints imposed by the hardware may be based on a size of one or more of the one or more buffers.

Each layer group may be configured to receive an input tensor defined by a width, a height and a number of channels and the one or more split parameters for a layer group comprise an input interleave value that defines a number of channels of the input tensor that are stored together in an interleaved manner.

The hardware may support one or more input interleave values for the input tensor and the one or more constraints imposed by the hardware may comprise a constraint that the input interleave value is one of the one or more supported input interleave values.

Each layer group may be configured to generate an output tensor defined by a width, a height and a number of channels and the one or more split parameters for a layer group may comprise an output interleave value that defines a number of channels of the output tensor that are stored together in an interleaved manner.

The hardware may support one or more output interleave values for the output tensor and the one or more constraints imposed by the hardware may comprise a constraint that the output interleave value is one of the one or more supported output interleave values.

The method may further comprise dividing the one or more layers of the neural network into the one or more layer groups based on the operations to execute each layer and the operations that can be performed in a hardware pass of the hardware.

The hardware may comprise a neural network accelerator.

The method may further comprise outputting the selected split parameters for the one or more layer groups.

The method may further comprise generating a set of instructions for causing the hardware to execute the neural network in the chunks identified by the selected split parameters for the one or more layer groups.

The method may further comprise causing the hardware to execute the neural network in the chunks identified by the selected split parameters for the one or more layer groups.

A sequence of layers may comprise only one layer or more than one layer.

The hardware configurable to execute a neural network may be a neural network accelerator.

A neural network accelerator may be a hardware accelerator comprising fixed-function circuitry configured to perform a set of one or more neural network operations.

A second aspect provides a computer-implemented method of dividing a neural network comprising one or more layers into chucks of operations executable in a hardware pass of hardware configurable to execute a neural network, the one or more layers of the neural network being divisible into two or more layer groups that comprise a sequence of one or more layers executable in a same hardware pass of the hardware, each layer group being divisible into one or more chunks of operations executable in a hardware pass of the hardware, the one or more chunks for a layer group defined by one or more split parameters, the method comprising: identifying split parameters for a first layer group and none, one or more than one layer group following the first layer group that minimize a loss function; selecting the identified split parameters for the first layer group as the split parameters for the first layer group; and for each other layer group of the two or more layer groups: identifying split parameters for that layer group and none, one, or more than one layer group following that layer group that minimize a loss function when the selected parameters for any layer group preceding that layer group are used; and selecting the identified split parameters for that layer group as the split parameters for that layer group.

Identifying the split parameters for the first layer group and none, one, or more than one layer group following the first layer group that minimize the loss function may comprise identifying the split parameters for only the first layer group that minimize the loss function.

Identifying the split parameters for the first layer group and none, one, or more than one layer group following the first layer group that minimizes the loss function may comprise identifying the split parameters for the first layer group and only one layer group following the first layer group that minimizes the loss function.

Identifying the split parameters for the first layer group and none, one, or more than one layer group following the first layer group that minimizes the loss function may comprise identifying the split parameters for the first layer group and more than one layer group following the first layer group that minimizes the loss function.

The split parameters for a layer group may comprise one or more parameters defining a split of an input tensor to the layer group.

The input tensor to a layer group may have a width dimension, a height dimension, and a channel dimension and the one or more parameters defining a split of the input tensor to the layer group may comprise one or more of a width split parameter defining a split in the width dimension, a height split parameter defining a split in the height dimension, and a channel split parameter defining a split in the channel dimension.

The split parameters for a layer group may comprise one or more parameters defining a split of a weight tensor for the layer group.

The weight tensor to a layer group may have a width dimension, a height dimension, a channel dimension, and a filter dimension and the one or more parameters defining a split of the weight tensor may comprise one or more of a channel split parameter defining a split in the channel dimension, and a filter split parameter defining a split in the filter dimension.

The loss function may represent a performance metric of the hardware.

The performance metric may be bandwidth.

The performance metric may be a number of cycles.

The identifications may be constrained by one or more constraints imposed by the hardware.

A third aspect provides a computer-implemented method of executing a neural network comprising one or more layers on hardware configurable to execute a neural network, the method comprising: dividing the neural network into chunks of operations executable in a hardware pass of the hardware, the one or more layers of the neural network being divisible into one or more layer groups that comprise a sequence of layers executable in a same hardware pass of the hardware, each layer group being divisible into one or more chunks of operations executable in a hardware pass of the hardware, the one or more chunks for a layer group defined by one or more split parameters, the dividing comprising: obtaining a layer group loss function that represents a performance metric associated with executing a layer group on the hardware as a function of the one or more split parameters and one or more neural network architecture parameters for the layer group, generating a neural network loss function based on the layer group loss function that represents the performance metric associated with executing the neural network on the hardware, and selecting the split parameters for the one or more layer groups that minimize the neural network loss function under one or more constraints imposed by the hardware that limit a number and/or type of operations that can be performed in a hardware pass of the hardware, the one or more constraints being based on the configuration of the hardware; and causing the hardware to execute the neural network in the chunks identified by the selected split parameters for the one or more layer groups.

The neural network accelerators described herein may be embodied in hardware on an integrated circuit. There may be provided a method of manufacturing, at an integrated circuit manufacturing system, the neural network accelerators described herein. There may be provided an integrated circuit definition dataset that, when processed in an integrated circuit manufacturing system, configures the system to manufacture the neural network accelerators described herein. There may be provided a non-transitory computer readable storage medium having stored thereon a computer readable description of a neural network accelerator described herein that, when processed in an integrated circuit manufacturing system, causes the integrated circuit manufacturing system to manufacture an integrated circuit embodying the neural network accelerator.

There may be provided an integrated circuit manufacturing system comprising: a non-transitory computer readable storage medium having stored thereon a computer readable description of the neural network accelerator described herein; a layout processing system configured to process the computer readable description so as to generate a circuit layout description of an integrated circuit embodying the neural network accelerator; and an integrated circuit generation system configured to manufacture the integrated circuit embodying the neural network accelerator according to the circuit layout description.

There may be provided computer program code for performing a method as described herein. There may be provided non-transitory computer readable storage medium having stored thereon computer readable instructions that, when executed at a computer system, cause the computer system to perform the methods as described herein.

The above features may be combined as appropriate, as would be apparent to a skilled person, and may be combined with any of the aspects of the examples described herein.

BRIEF DESCRIPTION OF THE DRAWINGS

Examples will now be described in detail with reference to the accompanying drawings in which:

FIG. 1 is a schematic diagram of an example deep neural network (DNN);

FIG. 2 is a schematic diagram illustrating performing an example convolution operation on an example tensor in a DNN;

FIG. 3 is a block diagram of an example neural network accelerator (NNA);

FIG. 4 is a block diagram of an example convolution engine;

FIG. 5 is a schematic diagram illustrating an example of how the inputs to a convolutional layer may be split in one or more dimensions;

FIG. 6 is a flow diagram of an example method of dividing a neural network into chunks of operations which can be executed in a hardware pass of a neural network accelerator;

FIG. 7 is a schematic diagram illustrating an example of splitting an input tensor in the width dimension;

FIG. 8 is a graph illustrating an example roofline plot;

FIG. 9 is a schematic diagram illustrating the split parameters selected for a first example neural network in accordance with two different methods;

FIG. 10 is an example roofline plot showing the maximum attainable operations/cycle for different layers of the first example neural network based on the split parameters selected in accordance with the two different methods;

FIG. 11 is a schematic diagram illustrating the split parameters selected for a second example neural network in accordance with the two different methods;

FIG. 12 is a graph of an example roofline plot showing the maximum attainable operations/cycle for different layers of the second example neural network based on the split parameters selected in accordance with the two different methods;

FIG. 13 is a graph illustrating the time taken to determine the split parameters for an example neural network;

FIG. 14 is a block diagram of an example computing-based device;

FIG. 15 is a block diagram of an example computer system in which the neural network accelerators described herein may be implemented; and

FIG. 16 is a block diagram of an example integrated circuit manufacturing system for generating an integrated circuit embodying the neural network accelerators described herein.

The accompanying drawings illustrate various examples. The skilled person will appreciate that the illustrated element boundaries (e.g., boxes, groups of boxes, or other shapes) in the drawings represent one example of the boundaries. It may be that in some examples, one element may be designed as multiple elements or that multiple elements may be designed as one element. Common reference numerals are used throughout the figures, where appropriate, to indicate similar features.

DETAILED DESCRIPTION

The following description is presented by way of example to enable a person skilled in the art to make and use the invention. The present invention is not limited to the embodiments described herein and various modifications to the disclosed embodiments will be apparent to those skilled in the art. Embodiments are described by way of example only.
A neural network accelerator (NNA) is hardware that is designed to accelerate the processing of a neural network (NN). As is known to those of skill in the art, a hardware accelerator is hardware designed to perform a specific set of one or more functions more efficiently than a general processing unit, such as a central processing unit (CPU). Accordingly, in contrast to a general CPU which can be configured to perform any number of functions, an accelerator can only perform a limited set of one or more functions. An NNA may have one or more hardware processing units which are each designed to accelerate one or more neural network operations. A neural network operation is defined herein as an operation that is used to execute all or a part of a neural network layer. A neural network layer may be executed by performing one or more neural network operations. Example neural network operations include, but are not limited to convolution operations, non-linear operations, pooling operations, element-wise operations and normalisation operations.

An NNA may, therefore, have, for example, a convolution processing unit which is configured to accelerate convolution operations, an activation processing unit which is configured to accelerate non-linear operations, a pooling processing unit configured to accelerate pooling operations, an element-wise operations processing unit configured to accelerate element-wise operations, and/or a normalisation processing unit configured to accelerate normalisation operations. Each hardware processing unit may be implemented by fixed-function circuitry. Accordingly, a neural network accelerator may be a hardware accelerator comprising fixed-function circuitry configured to perform a set of one or more neural network operations.

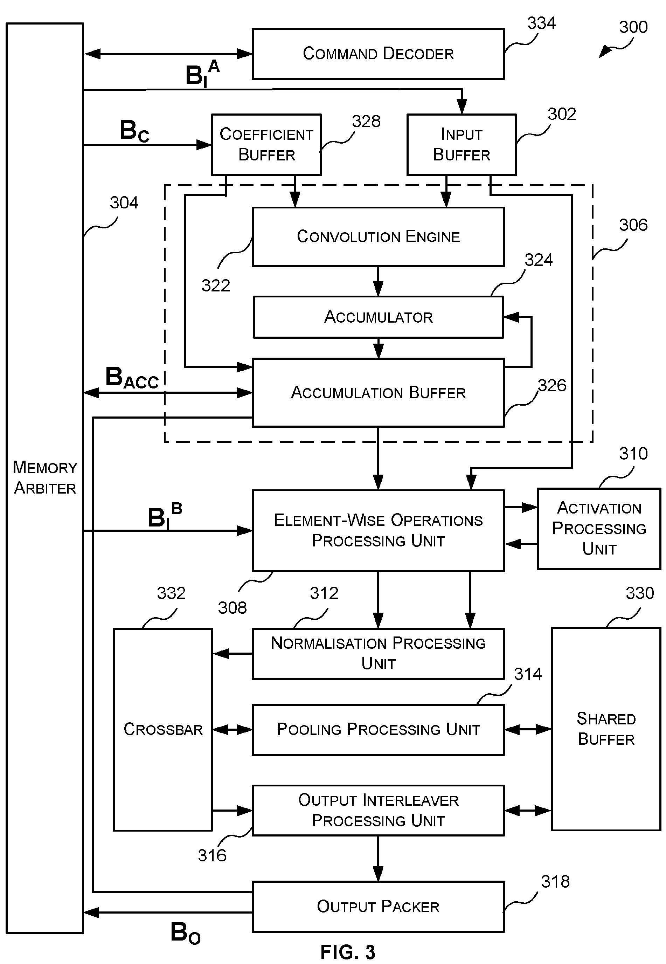

Reference is now made to FIG. 3 which shows an example NNA 300 which is known to the Applicant company, which is not an admission that it is known outside the Applicant company or well-known. The NNA 300 comprises an input buffer 302 which is configured to receive an input tensor from external memory via a memory arbiter 304, a plurality of hardware processing units 306, 308, 310, 312, 314, 316 which can be configured to process the received input tensor to generate an output tensor, and an output packer 318 to place the output tensor in a desired format before storing the output tensor in external memory via the memory arbiter 304.

Each hardware processing unit 306, 308, 310, 312, 314, 316 comprises hardware logic (e.g., fixed function circuitry) configured to accelerate performing one or more neural network operations on input data. Specifically, each hardware processing unit is configured to receive an input tensor, perform one or more operations on the input tensor to generate an output tensor, and output the generated output tensor. As shown in FIG. 3 one or more of the hardware processing units may also be able to (i) receive a secondary input tensor which is used to process the main input tensor and/or (ii) write and/or read data from a buffer.

The NNA 300 of FIG. 3 comprises a convolution processing unit 306, an element-wise operations processing unit 308, an activation processing unit 310, a normalisation processing unit 312, a pooling processing unit 314 and an output interleaver processing unit 316. It will be evident to a person of skill in the art that this is just an example set of hardware processing units and that other NNAs may have additional hardware processing units, fewer hardware processing units and/or different hardware processing units.

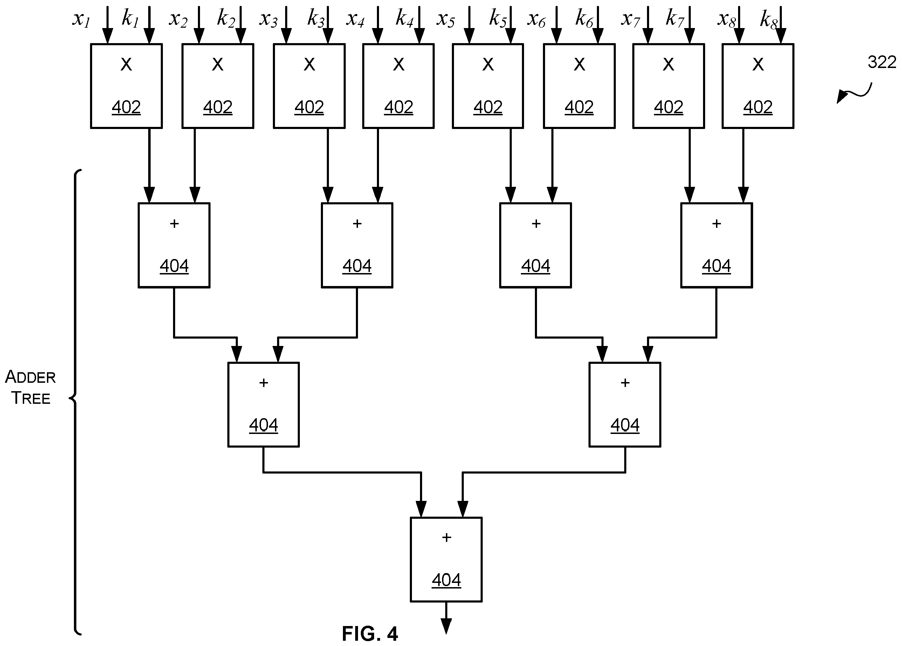

The convolution processing unit 306 is hardware configured to accelerate the processing of convolution operations. The convolution processing unit 306 is configured to receive input data and weights and perform convolution operations between the input data and weights and output the results of the convolution operations. The convolution processing unit 306 may comprise one or more convolution engines 322 which are configured to receive a set of weights $\{k_1, k_2 ..., k_8\}$ that represent all or a portion of a filter, and a set of input data values $\{x_1, x_2, ..., x_8\}$ that represent all or a portion of a window of the input data, and perform a multiply-accumulate calculation on the received weights and input data values. In some examples, as shown in FIG. 4, each convolution engine 322 may comprise a plurality of multipliers 402, each of which is configured to multiple a weight ($k_i$) and a corresponding input data value ($x_i$) to produce a multiplication output value. The multipliers 402 are followed by a plurality of adders 404 which calculate the sum of the multiplication outputs. As shown in FIG. 4 the adders 404 may form an adder tree. In the example of FIG. 4 the convolution engine 322 comprises eight multipliers 402, but in other examples there may be more or fewer multipliers. For example, in some cases there may be 128 multipliers. Generally, if there are Z multipliers an adder tree comprises Z-1 adders. The multipliers 402 and/or adders 404 may be implemented by fixed-function circuitry.

Since it may take more than one hardware pass of the convolution engine(s) 322 to generate a complete output value/tensel (e.g., because a convolution engine may only receive and process a portion of the weights of a filter and/or a portion of the input data values of a window in a cycle), the convolution processing unit 306 may comprise an accumulator 324 for each convolution engine 322. A hardware pass of the convolution engine(s) 322 comprises receiving a set of weights and a set of input data values and performing a multiply-accumulate operation thereon. Each accumulator 324 receives the output of one convolution engine 322 and adds the output to a previous convolution engine output that relates to the same filter. Since a convolution engine 322 may not generate or produce outputs that relate to the same filter in consecutive cycles the partial results of one or more filters may be stored in an accumulation buffer 326 and then the appropriate partial results may be provided to the accumulator(s) 324 each cycle by the accumulation buffer 326.

The weights used by the convolution processing unit 306 may be stored in a coefficient buffer 328.

The element-wise operations processing unit 308 is hardware configured to receive input data (e.g., an input tensor) and perform an element-wise operation on the input data (e.g., input tensor), optionally with another data set (e.g., another tensor) which may be obtained or retrieved from external memory via the memory arbiter 304. An element-wise operation is a same operation that is performed on each element of the input data/tensor (e.g., each input data value or each tensel). Element-wise operations which may be performed on the input data include, but are not limited to, add, multiply, maximum, and minimum.

The other data set/tensor may be the same size (e.g., have the same dimensions) as the input data/tensor such that corresponding elements of the two tensors are combined using an element-wise operation. Alternatively, the other data set/tensor and the input data/tensor may have different sizes or dimensions. If, for example, the mismatching dimension of one of the tensors is of size 1, an element-wise operation may be performed between the input data/tensor and the other data set/tensor using a broadcast technique wherein the smaller tensor is broadcast (or expanded) to the size of the other tensor. For example, a tensor of size $[N, H, W, C_{in}] = [1, 10, 1, 10]$ (where $N$ is the number of batches) can be combined element-wise with a tensor of size $[N, H, W, C_{in}] = [1, 10, 10, 10]$ by expanding the $W$ dimension of the first tensor.

The activation processing unit 310 is hardware configured to receive input data and apply a non-linear function (which may also be referred to as an activation function) thereto. Example, non-linear functions which may be implemented (or approximated) by the activation processing unit 310 include, but are not limited to, a Tanh function, a sigmoid function, a Rectified Linear Unit (ReLU) function or a leaky ReLU (LReLU) function. In a ReLU function, the output element $y_{i,j,k}$ is calculated by identifying a maximum value as set out in equation (1) wherein for $x$ values less than 0, $y = 0$. A LReLU function outputs the input if it is greater than zero, and outputs a fraction (e.g., 0.01x) of the input when it is negative. An example implementation of a LReLU function is set out in equation (2).

$$y_{i,j,k} = f\left(x_{i,j,k}\right) = max\{0, x_{i,j,k}\} \qquad (1)$$

$$y_{i,j,k} = f\left(x_{i,j,k}\right) = max\{0.01 * x_{i,j,k}, x_{i,j,k}\} \qquad (2)$$

In some cases, the activation function that is performed by the activation processing unit 310 may be configurable. For example, in some cases, the activation processing unit 310 may receive information that identifies one activation function of a plurality of activation functions that is to be applied to the input data.

In some cases, the activation processing unit 310 may be configured to store, in entries of a lookup table, data representing the activation function to be implemented. In these cases, the activation processing unit 310 may be configured to use the input data to lookup one or more entries in the lookup table and generate the output of the activation function based on the one or more entries in the lookup table and/or the input data. For example, the activation processing unit 310 may be configured to calculate the output of the activation function by interpolating between two or more entries read from the lookup table. An example implementation of an activation processing unit 310 is described in the Applicant's GB Patent No. 2552242, which is herein incorporated by reference in its entirety.

The normalisation processing unit 312 is hardware configured to receive input data and apply a normalisation function to the received input data to produce normalised data. Example normalisation functions which may be implemented by the normalisation processing unit 312 include, but are not limited to, a Local Response Normalisation (LRN) function and a Local Contrast Normalisation (LCN) function. In some cases, the normalisation function which is applied to the input data may be configurable. For example, the normalisation processing unit 312 may receive information indicating which of a plurality of normalisation functions is to be applied to the input data. This allows different normalisation functions to be applied to different input data. An example implementation of a normalisation processing unit 312 is described in the Applicant's GB Patent No. 2552242, which is herein incorporated by reference in its entirety.

The pooling processing unit 314 is hardware configured to receive input data and apply a pooling function to the received input data. A pooling function is a function that reduces the size of the data by summarizing blocks or subsets of data. Example pooling functions include a maximum function, a minimum function, and an average function. The purpose of a pooling function is to reduce the spatial size of the representation to reduce the number of parameters and computations in the neural network, and hence to also control overfitting. The pooling processing unit 314 may comprise one or more parallel pooling engines (not shown) that can be configured to perform the pooling operations.

The output interleaver processing unit 316 is hardware configured to receive input data and perform a rearrangement operation to produce data that is in a particular order. The rearrangement may comprise sorting and/or transposing the received input data.

As shown in FIG. 3, the pooling processing unit 314 and the output interleaver processing unit 316 may each have access to a shared buffer 330 which can be used by these units to write data to and retrieve data from. For example, the shared buffer 330 may be used by these units to rearrange the order of received data or the generated data. For example, the pooling processing unit 314 and/or the output interleaver processing unit 316 may be configured to write data to the shared buffer 330 and then read the same data out in a different order. In some cases, each of the pooling processing unit 314 and the output interleaver processing unit 316 may be allotted a portion of the shared buffer 330 which only that unit can access. In these cases, the pooling processing unit 314 and the output interleaver processing unit 316 may only be able to read data out of the shared buffer 330 that they have written to it.

One or more of the hardware processing units 306, 308, 310, 312, 314, 316 may be configured to process input data loaded into to the NNA in a pipelined manner. For example, in some cases, the input tensor loaded to the input buffer 302 may be processed by the convolution processing unit 306 and then the activation processing unit 310. However, in other cases the input tensor loaded into the input buffer 302 may be processed by the normalisation processing unit 312 and then the pooling processing unit 314. As shown in FIG. 3 the hardware processing units 306, 308, 310, 312, 314, 316 may be connected such that data may flow from one hardware processing unit to another. For example, the normalisation processing unit 312, pooling processing unit 314 and output interleaver processing unit 316 are coupled to a configurable crossbar 332 which can dynamically establish connections between these units. The hardware processing units that process a set of data input to the NNA 300 may be referred to as the active or enabled hardware processing units. The NNA 300 may receive instructions (via a command decoder 334) for each set of data input to the NNA indicating which hardware processing units are active (i.e., which hardware processing units are to process that input data).

A detailed description of the NNA 300 shown in FIG. 3 can be found in the Applicant's GB patent no. 2566702 which is herein incorporated by reference in its entirety.

NNAs, such as, but not limited to, that shown in FIG. 3, may have hardware constraints (e.g. the size of the buffers (e.g. input buffer, coefficient buffer and/or shared buffer), number of convolution engines, number of pooling engines) that limit the types of operations that can be performed, the number of operations that can be performed, and the amount of data processed, by the NNA at a time. The loading of input data into the NNA and processing that input data using one or more hardware processing units is referred to herein as a hardware pass of the NNA. Where all of the operations to execute a neural network cannot be completed in a single hardware pass of the NNA, the operations may have to be split into chunks that can be performed in a hardware pass of the NNA.

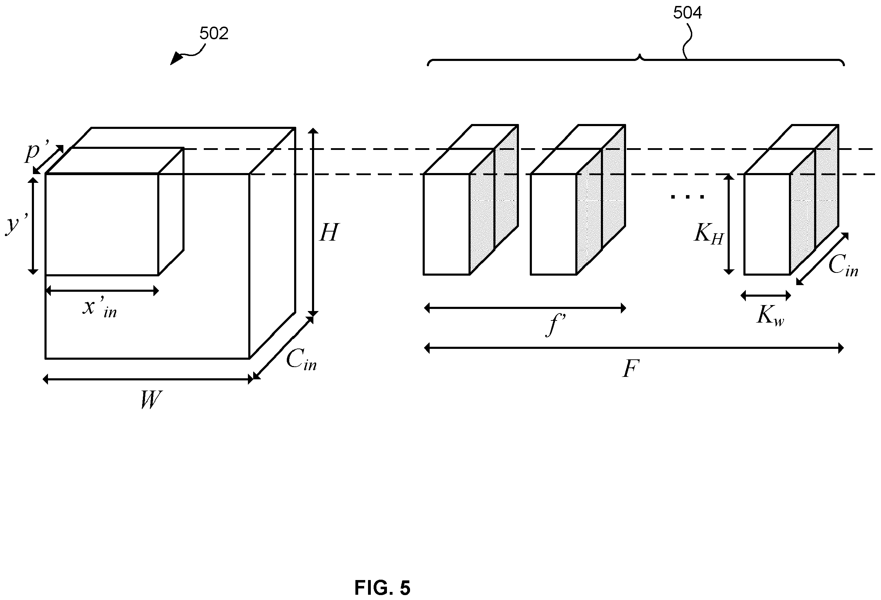

In some cases, the layers of a neural network may first be divided into layer groups, wherein each layer group comprises a sequence of one or more layers that could be performed in the same hardware pass of the NNA (if the hardware constraints allow). For example, if the NNA can perform convolution operations for a layer and pooling operations for a layer in the same hardware pass, a layer group may comprise a convolutional layer followed by a pooling layer. In contrast, if the NNA cannot perform convolution operations for multiple layers in the same hardware pass a layer group may not comprise two convolutional layers. Depending on the NNA hardware constraints, all of the operations associated with a layer group may not be able to be performed in the same hardware pass. For example, the input tensor to the first layer of the layer group may be too large to be processed in a single hardware pass of the NNA. Accordingly, the operations for a layer group may be further subdivided or split into smaller chunks which can be performed in a hardware pass. For example, as shown in FIG. 5, the input tensor 502 to the first layer of the layer group may be split along one or more of the width $W$, height $H$, or channel $C_{in}$ dimensions; and/or for a convolutional layer, the convolution kernel (which may also be referred to as the weight kernel, coefficient kernel, weight tensor, or coefficient tensor) 504 may be split along one or more of the input channel $C_{in}$ dimension and the filter dimension $F$ (which may also be referred to as the output channel dimension $C_{out}$). As described in more detail below, the parameters which define how the operations of a layer group are divided or split into hardware passes are referred to herein as the split parameters.

A method known to the Applicant company for determining how to split the operations associated with layer groups of a neural network into hardware passes (e.g. into chunks that the neural network accelerator can process), which is not an admission that the method is known outside the Applicant company or is well-known, comprises selecting the split parameters for one layer group at a time (optionally with reference to one or more subsequent layer groups) and based on the split parameters selected for the previous layer groups. For example, if $X_i$ represents the split parameters for a layer group $i$, then the split parameters $\hat{X}_1$ that are used to execute the first layer group (i.e. layer group 1) may be selected by selecting the set of split parameters for that layer group and one or more other subsequent layer groups (i.e. layer groups 1 to $i$) that minimize a loss function M as shown in equation (3). The selected split parameters for the first layer group then become the split parameters for the first layer group $\hat{X}_1$. Then, the split parameters for any subsequent layer group (i.e. layer group $j$) may be selected by selecting the set of split parameters for that layer group and one or more other subsequent layer groups (i.e. layer groups $j$ to $j + i$ - 1) that minimize a loss function, based on the split parameters selected for the previous layers (e.g. layer groups 1 to $j$ - 1) as shown in equation (4). The selected split parameters for layer group $j$ then become the split parameters for that layer group $\hat{X}_j$.

$$\hat{X}_1 = \underset{X_{1:i}}{\mathrm{Argmin}}\, M(X_{1:i}) \quad s.t.\, constraints \quad (3)$$

$$\hat{X}_j = \underset{X_{j:j+i-1}}{\mathrm{Argmin}}\, M(X_{j:j+i-1}) + M(\hat{X}_{1:j-1}) \; s.t.\, constraints. \; \& \; 1 < j \quad (4)$$

Accordingly, in this method (which may be referred to herein as the previous split method) the split parameters for the layer groups are gradually found by expanding local searches. Specifically, the method starts with one locality (e.g., the first layer group, or a small set of layers groups including the first layer group), and a local search is performed. The split parameters for the first layer group are then fixed and the next locality is explored. This is repeated until the split parameters for all layer groups have been identified. However, testing has shown that this method may not select optimum split parameters for the neural network as a whole. This is because, although this method has the advantage of working with smaller, more manageable, chunks of the neural network, the method is performing local searches. As a result, the method may select split parameters that satisfy a local minima, rather than a global minima.

Accordingly, described herein are methods for determining how to split the operations associated with the layer groups of a neural network into chunks that the neural network accelerator can process (e.g., into hardware passes of the neural network accelerator) in a global manner. In other words, instead of performing a local search for the split parameters for each layer group, a global search is performed for the split parameters for all layer groups of the neural network that minimize or maximize a performance metric under the hardware constraints. In the methods described herein this is achieved by generating a layer group model (e.g., loss function) that represents a performance metric (e.g., bandwidth or cycles) for a layer group that is a function of the split parameters and the neural network architecture parameters associated with the layer group. A neural network model (e.g., loss function) that represents the performance metric (e.g., bandwidth or cycles) for the neural network that is a function of the split parameters and neural network architecture parameters is then generated from the layer group model. For example, the neural network model (e.g., loss function) may be the sum of the layer group models (e.g., loss function) over all layer groups. A software tool or solver can then be used to select the split parameters that minimize the neural network model (e.g., loss function) under the neural network accelerator constraints.

The methods described herein allow for the selection of layer group split parameters that optimise the execution of the neural network as whole. Accordingly, the methods described herein have proven to select layer group split parameters that allow a neural network to be executed more efficiently on a neural network accelerator with respect to a performance metric (e.g., number of cycles/latency or bandwidth). In addition, separating the model (e.g., loss function) from the solver makes it easier to modify the model to account for new constraints due to hardware changes. It also allows for different solvers to be used.

As described in more detail below, once the split parameters for the layer groups have been identified, instructions may be generated which cause the neural network accelerator to execute the neural network in the chunks identified by the split parameters. Since the split parameters, and by extension the chunks identified thereby and the instructions to execute those chunks, are particularly adapted for the specific neural network accelerator and the configuration thereof, their selection and generation is motivated by the technical considerations of the internal functioning of the neural network accelerator (i.e., hardware). Specifically, the chunks and the instructions to execute those chunks are specifically selected to exploit the specific hardware features of the neural network accelerator - e.g., the size of the buffers, the maximum bandwidth speed, frequency of operation etc. Thus, the chunks and the instructions to execute those chunks allow a neural network to be executed more efficiently on a specific neural network accelerator.

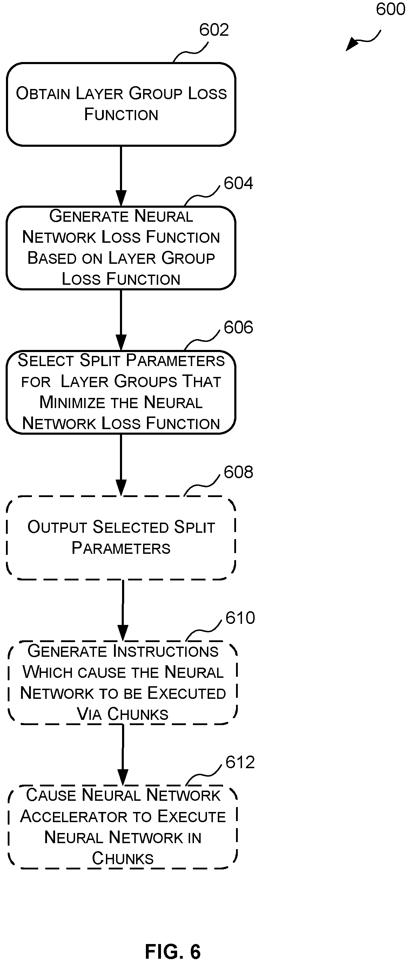

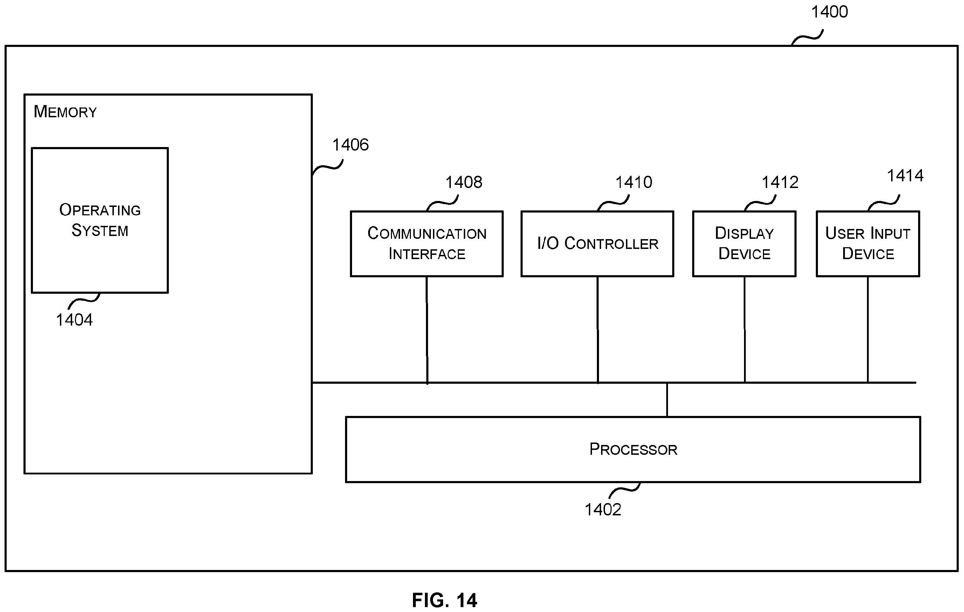

Reference is now made to FIG. 6 which illustrates an example method 600 of dividing a neural network into chunks of operations executable in a hardware pass of a neural network accelerator (or other hardware configurable to execute a neural network). The method 600 may be implemented by a computing-based device such as, but not limited to, the computing-based device 1400 described below with respect to FIG. 14. For example, there may be a computer readable storage medium having stored thereon computer readable instructions that, when executed at a computing-based device, cause the computing-based device to perform the method 600 of FIG. 6.

The method 600 begins at block 602 where a layer group loss function that represents a performance metric associated with executing a (generic) layer group on the neural network accelerator as a function of the one or more split parameters and one or more neural network architecture parameters for the layer group is generated or obtained. A performance metric associated with executing a layer group on a neural network accelerator provides a quantitative assessment or measure of how well the neural network executes the layer group. Example performance metrics include, but are not limited to, the bandwidth used to transfer data into and out of the neural network accelerator to execute the layer group, the number of cycles of the neural network accelerator to execute the layer group, and the power consumed or used by the neural network accelerator to execute the layer group.

The split parameters for a layer group define how the operations of a layer group are split or divided into chunks that can be processed on the neural network accelerator. In other words, the split parameters for a layer group define the hardware passes of the neural network accelerator to execute a layer group. Example split parameters are described below, and may include parameters, such as, but not limited to, parameters defining a split of one or more inputs (e.g., the input tensor and/or weight kernel or tensor) in one or more dimensions.

The term "neural network architecture parameters" is used herein to mean the parameters that define the neural network. The neural network architecture parameters include, but are not limited to, the dimensions of input tensors, the dimensions of weight tensors, and convolution parameters such as stride and dilation. Accordingly, the neural network architecture parameters associated with a layer group may include the dimension of the input tensors, dimensions of weight tensors, and/or convolution parameters for the layers in the layer group.

Example layer group loss functions for bandwidth and cycle performance metrics are described in detail below. Once a (generic) layer group loss function has been obtained or generated, the method 600 proceeds to block 604.

At block 604, a neural network loss function is generated, based on the layer group loss function generated in block 602, that represents the performance metric (e.g., bandwidth, cycles, power) associated with executing the specific neural network on the neural network accelerator. In some cases, the neural network loss function for a neural network may be generated by (i) configuring one copy of the layer group loss function for each layer group of the neural network based on the neural network architecture parameters for the layer group and the layers/operations in the layer group, and (ii) generating a function that is a summation of the configured layer group loss functions. For example, if a neural network is divided into three layer groups, generating a neural network loss function for that neural network may comprise (i) configuring a first copy of the layer group loss function based on the neural network architecture parameters and the layers/operations associated with the first layer group, (ii) configuring a second copy of the layer group loss function based on the neural network architecture parameters and the layers/operations associated with the second layer group, (iii) configuring a third copy of the layer group loss function based on the neural network architecture parameters and the layers/operations associated with the third layer group, and (iv) combining the three configured copies of the layer group loss function. Once the neural network loss function has been generated the method 600 proceeds to block 606.

At block 606, the split parameters for the one or more layer groups that minimize the neural network loss function under one or more constraints imposed by the neural network accelerator are selected. As noted above, the split parameters that minimize the neural network loss function may be selected by a software tool or solver. Example constraints which may be imposed by the neural network accelerator are described below. Where the neural network accelerator has one or more buffers (e.g., an input buffer, coefficient buffer and/or shared buffer) for storing data input to and/or generated by the neural network accelerator, the constraints may include one or more constraints based on the size of the buffers. Once the split parameters have been selected the method may end or the method may proceed to any of blocks 608, 610 and 612.

At block 608, the split parameters selected in block 606 may be output for use in configuring the neural network accelerator to execute the neural network in the chunks identified by the split parameters. The selected split parameters may be output in any suitable form. In some cases, the selected split parameters may be output on a computer readable medium.

At block 610, a set of instructions which cause the neural network accelerator to execute the neural network in the chunks identified by the selected split parameters is generated. The instructions which cause a neural network accelerator to execute the neural network in the chunks identified by the selected split parameters may be dependent on the configuration of the neural network accelerator. For example, the neural network accelerator 300 of FIG. 3 may be configured to receive instructions (e.g., via the command decoder 334) for each hardware pass that identify the data to be loaded into the neural network accelerator and which hardware processing units are to process the input data. In some cases the instructions for a hardware pass may include other information such as, but not limited to, the location in memory where the output of the hardware pass is to be stored, the format of the input tensor, the format of the weight tensor, the activation function to be applied, and/or the normalisation function to be applied. The generated instructions may be stored on a computer readable medium which when executed by the neural network accelerator cause the neural network accelerator to execute the neural network in the chunks identified by the split parameters.

At block 612, the neural network accelerator is configured to execute the neural network in the chunks identified by the selected split parameters. Configuring a neural network accelerator to execute the neural network in the chunks identified by the selected split parameters may comprise generating instructions which cause the neural network accelerator to execute the neural network in the chunks identified by the selected split parameters as described with respect to block 610 and sending or otherwise providing the instructions to the neural network accelerator.

**Split Parameters**

As described above, the term 'split parameters' for a layer group is used herein to mean a set of parameters that define how the operations of a layer group are split or divided into chunks that can be processed on the neural network accelerator. In other words, the split parameters for a layer group define the hardware passes of the neural network accelerator to execute a layer group. Specifically, the split parameters define the number of hardware passes for a layer group, and the data to be processed in each hardware pass. The specific split parameters that are used to define the hardware passes for layer group are dependent on the configuration of the neural network accelerator. For example, some neural network accelerators may allow an input tensor to be split in any dimension whereas other neural network accelerators may only support input tensor splits in a limited number of dimensions. Example split parameters will now be described.

As described above, each layer group receives an input tensor and performs one or more operations on that input tensor to generate an output tensor. As described with reference to FIG. 2, the tensors in a DNN are often, but are not necessarily, three-dimensional. A 3D input tensor 200 may be described as $C_{in}$ planes or channels of data, where each plane has a dimension $W \times H$, wherein $W$ is the width and $H$ is the height of each plane. As described above, one way the computation of a layer group may be divided into chunks, or hardware passes, is splitting the input tensor of the layer group into smaller chunks in one or more dimensions (e.g., the width dimension $W$, height dimension $H$ and/or plane dimension $C_{in}$), wherein each chunk is processed in a separate hardware pass. Accordingly, the split parameters for a layer group may comprise one or more parameters that define the split of the input tensor in one or more dimensions.

For example, where the input tensor may be split in the width dimension $W$, then the split parameters for a layer group may comprise an input width split parameter $x'_{in}$ (which may also be referred to as the xin-split parameter) which defines the width of the input data processed per hardware pass. In some cases, instead of comprising an input width split parameter $x'_{in}$ the split parameters may comprise an output split parameter $x'_{out}$ (which may be referred to as the xout-split parameter) which defines the width of the output data per hardware pass. It will be evident to a person of skill in the art that $x'_{in}$ and $x'_{out}$ will be related and one can be determined from the other (e.g., from the convolution parameters).

Similarly, where the input tensor may be split in the plane or channel dimension $C_{in}$, then the split parameters for a layer group may comprise a plane split parameter $p'$ (which may also be referred to as the p-split parameter) which defines the number of channels or planes processed per hardware pass. Finally, where the input tensor may be split in the height dimension $H$ then the split parameters for a layer group may comprise a height split parameter $y'$ (which may also be referred to as the y-split parameter) which defines the height of the input data each hardware pass. In the examples described below the split parameters for a layer group comprise a width split parameter $x'_{in}$ or $x'_{out}$ and a plane split parameter $p'$, however it will be evident to a person of skill in the art that this is an example only, and that the split parameters for a layer group may comprise any combination of $x'_{in}/x'_{out}$, $p'$ and $y'$.

As described above, some layers, such as convolutional layers, are processed by applying a filter kernel (which may also be referred to as a weight kernel) to the input tensor. The filter kernel may be a four-dimensional tensor that comprises $F$ filters of size $K_W \times K_H \times C_{in}$, wherein $K_W$ is the width, $K_H$ is the height, and $C_{in}$ is the number of planes or channels of each filter. Another way in which the operations of a layer group comprising such a layer may be divided into chunks or hardware passes is splitting the filter kernel into chunks in one or more dimensions, wherein each chunk is processed in a separate hardware pass. Accordingly, the split parameters for a layer group may comprise one or more parameters that define the split of the filter kernel in one or more dimensions.

For example, as shown in FIG. 5, if the filter kernel may be split in the filter $F$ dimension, then the split parameters for a filter group may comprise a filter split parameter $f'$ (which may also be referred to as the f-split parameter) that identifies the maximum number of filters per hardware pass. For example, if the filter kernel comprises 8 filters and $f'$ is set to 2 then there are 4 f-splits each of which comprises 2 filters. It is noted that a plane split or p-split (i.e., a split in the plane or channel dimension) would apply to both the input tensor and the filter kernel, so there may not be both an input tensor plane split parameter and a separate filter kernel plane split parameter.

The split parameters that relate to a dimension of an input or output tensor-e.g., the input tensor, output tensor and/or filter kernel or tensor (e.g. $x'_{in}/x'_{out}$, $p'$, $y'$ and $f'$) are referred to herein as data dimension parameters. Where the split parameters for a layer group comprise two or more data dimension parameters (e.g. two or more of $x'_{in}/x'_{out}$, $p'$, $y'$ and $f'$) the split parameters may also comprise an execution order $o'$ parameter that defines the order in which the splits are processed. For example, if the split parameters comprise $x'_{in}/x'_{out}$, $p'$ and $f'$, then the splits may be processed in any of the following execution orders: XPF, XFP, PXF, PFX, FPX, or FXP. The execution order specifies how the splits are processed.

For example, for XPF order, an x-split is selected, a p-split is selected, and an f-split is selected. The input data and weight data corresponding to the selected splits is then processed in a hardware pass. Then with the same x-split and p-split you cycle through the f-splits in subsequent hardware passes. Once you have cycled through all of the f-splits you move to the next p-split, and then cycle through the f-splits in subsequent hardware passes. Once you have cycled through all the p-splits you move to the next x-split, and repeat. In other words, in XPF order the same input data is used in several consecutive hardware passes, but the filter data or weights are changed each of these hardware passes. The processing of a convolutional layer in accordance with XPF order is exemplified by the following pseudocode where fsplits is the number of f-splits, psplits is the number of psplits and xsplits is the number of xin-splits.

```
fsplits = ceil( F / f' )
psplits = ceil( C_in / p' )
xsplits = ceil( W / x'in )
Split data = data( p , x )
Split weight = weight( f , p )
For x in xsplits:
     For p in psplits:
             For f in fsplits:
```

```
Load or reuse(split data , split weight)
Load (accumulation value)
Convolve and accumulate(split data , split weight ,
accumulation value)
Write(result or accumulation value)
```

Similarly, for FPX order, an f-split is selected, a p-split is selected, and an x-split is selected. The input data and weight data corresponding to the selected splits is then processed in a hardware pass. Then with the same f-split and p-split you cycle through the x-splits in subsequent hardware passes. Once you have cycled through all of the x-splits you move to the next p-split, and then cycle through the x-splits in subsequent hardware passes. Once you have cycled through all the p-splits you move to the next f-split, and repeat. In other words, in FPX order the same weight data may be used in several consecutive hardware passes, but the input data changes each of these hardware passes. The processing of a convolutional layer in accordance with FPX order is exemplified by the following pseudocode where fsplits is the number of f-splits, psplits is the number of psplits and xsplits is the number of xin-splits.

```
For f in fsplits:
     For p in psplits:
          For x in xsplits:
               Load or reuse(split data , split weight)
               Load (accumulation value)
               Convolve and accumulate(split data , split
               weight , accumulation value)
               Write(result or accumulation value)
```

In some cases, the execution order parameter $o'$ may specify any of the possible orders (e.g., any of XPF, XFP, PXF, PFX, FPX, or FXP). However, the inventors have determined that PFX and XPF will generally perform equal to, or better than, the other four possible orders. Accordingly, in some cases, the execution order parameter $o'$ may only specify one of PFX and XPF.

Depending on the configuration of the neural network accelerator there may be one or more additional split parameters. For example, some neural network accelerators may be configured to store tensor data in a packed format such that tensels related to multiple planes or channels are stored together. Specifically, the tensels at the same width and height position, but different planes or channels may be stored or packed together. The number of planes packed together may be referred to as the interleaving factor. Where the neural network accelerator supports interleaving and the interleaving factor is configurable, then the split parameters for a layer group may comprise one or more parameters that define the interleaving factor for one or more of the tensors that are stored in the neural network accelerator. For example, where the neural network accelerator can receive a main input tensor (which may be referred to a tensor A), a secondary input tensor (which may be referred to as tensor B), and generate an output tensor, each of which can have a different interleave value, the split parameters may comprise one or more of: a main input tensor interleave factor $I_i^A$, a secondary input tensor interleave factor $I_i^B$, and an output tensor interleave factor $I_o$.

As described above, a neural network accelerator may comprise one or more convolution engines which can multiply each of a plurality of input values with a corresponding weight and sum the results of the multiplications. In some cases, the convolution engines of a neural network may be configurable to operate in a normal mode (which may be referred to as single operation mode) where it can receive $R$ input values and $R$ weights at a time and generate one output for those $R$ inputs and $R$ weights, or in a twin mode (which may be referred to as twin operation mode) where it can receive $2R$ input values and $2R$ weights at a time and generate two outputs for those $2R$ inputs and $2R$ weights (e.g. it can generate a first output from $R$ inputs and $R$ weights, and a second output from the other $R$ inputs and the other $R$ weights). The twin mode may be available when the bit width of the input data values is less than or equal to half the maximum bit width supported by the convolution engine. Accordingly, in twin mode the convolution engines take advantage of the available bit width to perform two multiply-accumulate operations instead of just one. Where a neural network accelerator has convolution engines that support a twin mode, the split parameter for a layer group may comprise a single/twin parameter $s'$ which specifies whether the convolution engines are to operate in normal or twin mode.

**Constraints**

A neural network accelerator may have one or more constraints that limit the number and/or type of operations that can be performed in a hardware pass. Such constraints will vary depending on the configuration of the neural network accelerator. The split parameters for the layer groups of a neural network are selected so as to comply with such constraints. Example neural network accelerator constraints that may affect the number and/or type of operations that can be performed in a hardware pass will now be described.

As described above with respect to FIG. 3, a neural network accelerator may have one or more internal storage units (e.g., buffers) which are used to store data to be processed by the neural network accelerator (e.g. input data received from external memory) and/or data generated by the neural network accelerator (e.g. output data before it is output to external memory). For example, the example neural network accelerator 300 of FIG. 3 comprises an input buffer 302 which is used to store the main input data (e.g. the main input tensor) to be processed by the neural network accelerator, a coefficient buffer 328 which is used to store the weights for a convolutional layer, and a shared buffer 330 which is used to store the output data for a hardware pass (and optionally other data). The size of these buffers may impose certain constraints. These may be referred to as buffer constraints.

For example, the processing units of the neural network accelerator of FIG. 3 may be configured to generate at least one line of output data at a time. To allow the first active processing unit for a hardware pass to be able to generate a line of output data at a time, there has to be enough input data in the input buffer 302 to generate a line of output data. Accordingly, one buffer constraint may be that enough data to allow the first active processing unit for a hardware pass to generate a line of output data must fit in the input buffer. For example, if the layer group comprises a convolutional layer such that the first active processing unit for the layer group is the convolution processing unit, then at least $K_H$ lines of the input data are required to enable the convolution processing unit to generate a line of output, where $K_H$ is the convolution filter height. Accordingly, the constraint may be that at least $K_H$ lines of the input data must fit in the input buffer 302. This is expressed in equation (5) where *Ibuf* is the size of the input buffer. This means that $x'_{in}$ and *p'* are to be selected to satisfy this constraint.

$$K_H \times x'_{in} \times p' \leq Ibuf \quad (5)$$

Where the first layer for a layer group is not a convolutional layer then the constraint in equation (5) may be rephrased by replacing $K_H$ with a suitable value. For example, if the first layer for a layer group is a pooling layer, then $K_H^{pool}$ lines of the input data are required to generate one line of the output, where $K_H^{pool}$ is the pooling window height. Thus, the constraint may be that at least $K_H^{pool}$ lines of the input data fit in the input buffer 302. Similarly, if the first layer of a layer group is an element-wise operations layer then only one line of the input data is required to generate one line of the output, thus the constraint may be that at least one line of the input data must fit in the input buffer 302.

Where the first layer of a layer group is a convolution layer then to generate a line of output at a time, in addition to requiring enough input data in the input buffer 302, there must be enough weights (and any biases) in the coefficient buffer 328. Accordingly, a second buffer constraint (which may be referred to as the coefficient buffer constraint) may be that (when the first layer of a group layer is a convolutional layer) the weights or coefficients to enable the convolution processing unit to generate a line of the output data must fit in the coefficient buffer 328. This is expressed in equation (6) where *Cbuf* is the size of the coefficient buffer. It will be evident to a person of skill in the art that $K_H \times K_W \times f' \times p'$ represents the weights to generate a line of a convolutional layer output, and $f' \times \frac{bitdepth}{8}$ *f'* represents the biases to generate a line of a convolutional layer output. This means that *p'* and *f'* are to be selected to satisfy this constraint.

$$K_H \times K_W \times f' \times p' + f' \times \frac{bitdepth}{8} \leq Cbuf \quad (6)$$

Similarly, the neural network accelerator of FIG. 3 may be configured to output the output data for a hardware pass a horizontal line at a time. Accordingly, the shared buffer 330, which is used to store the output data before it is passed to the output packer 318, should be able to store a full line of the output data at a time. This is expressed in equation (7), where *Sbuf* is the size of the shared buffer. This means that *x'₀ᵤₜ* and *f'* are to be selected to satisfy this constraint.

$$x'_{out} \times f' \leq Sbuf \quad (7)$$

As described above, some neural network accelerators may be able to store tensor data in an interleaved manner (e.g., multiple planes or channels may be packed together). Where a neural network accelerator supports interleaving of tensor data there may be constraints on which interleaving factors are supported and the supported interleave factors may vary for different tensors. For example, the neural network accelerator may only support interleave factors of 1, 4, 8, 16, 32, 64, 128 for input tensor A and the output tensor. Accordingly, as shown in equation (8), the input tensor A and the output tensor interleave factors may be constrained to one of the supported interleave factors. Similarly, the neural network accelerator may only support interleave factors of 16, 32, 64 and 128 for input tensor B. Accordingly, as shown in equation (9), the input tensor B interleave factors may be constrained to one of the supported interleave factors.

$$I_i^A, I_o \in \{1,\ 4,\ 8, 16, 32,\ 64, 128\} \qquad (8)$$

$$I_i^B \in \{16, 32,\ 64, 128\} \qquad (9)$$

Also, to be able to store the input tensor A, input tensor B and output tensor efficiently in the neural network accelerator, $p'$ and $f'$ may be constrained to be proportional to the input tensor A and output tensor interleave factors respectively as shown in equations (10) and (11):

$$p' \propto I_i^A \qquad (10)$$

$$f' \propto I_o \qquad (11)$$

In some cases, another constraint may be that if $x'_{out}$ is not equal to $W_{out}$ (indicating that there is an x-split), then the width of the output data block generated in a hardware pass is a multiple of the burst size ($BS$) (i.e. $x'_{out} \times I_o \propto BS$).

In some cases, one or more of the input tensor dimension parameters (e.g., $x'_{in}$ ,f',p') may have an upper limit. For example, in some cases the upper bound to $x'_{in}$ may be the closest value to $W \times I_i$ that is divisible by the burst size ($BS$) (i.e. $1 \leq x'_{in} \leq \left\lceil \frac{W \times I_i}{BS} \right\rceil \times BS$). In some cases, the upper bound to $f'$ may be the closet value to $C_{out}$ that is divisible by $I_o$ (i.e., $1 \leq f' \leq \left\lceil \frac{C_{out}}{I_o} \right\rceil \times I_o$). In some cases, the upper bound to p' may be the closet value to $C_{in}$ that is divisible by $I_i$ (i.e. $1 \leq p' \leq \left\lceil \frac{C_{in}}{I_i} \right\rceil \times I_i$).

It will be evident to a person of skill in the art that these are only example neural network accelerator constraints and other neural network accelerators may have only a subset of these constraints, additional constraints and/or different constraints.

**Example 1** - **Performance Metric = Bandwidth**

In a first example, the neural network accelerator performance metric that is used to select the split parameters is the bandwidth to execute the neural network on the neural network accelerator. The bandwidth to execute a neural network on a neural network accelerator is the total amount of data loaded into the neural network accelerator from external memory and written from the neural network accelerator to external memory to execute the neural network.

When the performance metric is bandwidth, block 602 of the method 600 FIG. 6 comprises obtaining or generating a model (e.g. loss function) that represents the bandwidth to execute any layer group on the neural network accelerator as a function of the split parameters and the neural network architecture parameters associated with the layer group (which may be referred to herein as the bandwidth model for a layer group); block 604 comprises generating a model (e.g. loss function) that represents the bandwidth to execute a specific neural network on the neural network accelerator based on the bandwidth model for a layer group (which may be referred to herein as the bandwidth model for the neural network); and block 606 comprises selecting the split parameters for the layer groups that minimize the loss function for the neural network under the neural network accelerator constraints.

Generating the bandwidth model for a layer group may comprise identifying the data that is input to and output from the neural network accelerator to execute a layer group. For example, executing a layer group $L$ on the neural network accelerator of FIG. 3 comprises loading a main input tensor (e.g. input tensor A) into the neural network accelerator and outputting the output tensor from the neural network accelerator, and may optionally include loading in a secondary input tensor into the neural network accelerator (e.g. if an element-wise operations layer forms part of the layer group), loading a filter kernel or tensor (e.g. the weights or coefficients) into the neural network accelerator (e.g. if a convolutional layer forms part of the layer group), and/or loading data into, or writing data to memory from, the accumulation buffer. $B_i^{LA}$ is used to represent the bandwidth to load the main input tensor into the neural network accelerator for layer group $L$, $B_i^{LB}$ is used to represent the bandwidth to load the secondary input tensor into the neural network accelerator for layer group $L$, $B_c^L$ is used to represent the bandwidth to load the filter kernel into the neural network accelerator for layer group $L$, $B_o^L$ is used to represent the bandwidth to write the output tensor to memory for layer group $L$, and $B_{acc}^L$ is used to represent the bandwidth to load data into, and write data to memory from, the accumulation buffer for layer group $L$. Accordingly, the total bandwidth to execute a layer group $L$ (i.e., $BW^L$) on the neural network accelerator of FIG. 3 can be represented as a sum of these bandwidth values as shown in equation (12):

$$BW^L = (B_i^{LA} + B_i^{LB}) + B_c^L + B_o^L + B_{acc}^L \qquad (12)$$

Once the data elements that are input to, and output, from the neural network accelerator have been identified, the bandwidth to load those data elements into the neural network accelerator and/or write those data elements from the neural network accelerator is expressed as a function of the split parameters and the neural network architecture parameters.

For example, the output of a layer group may be a three-dimensional tensor with a width $W_{out}$, height $H_{out}$ and $C_{out}$ planes or channels. The amount of bandwidth to write this tensor out to memory will be based on the width (e.g., number of columns) of the output generated each x-split ($x'_{out}$), the output interleave factor ($I_o$) and the burst size ($BS$) as shown in equation (13). It will be evident to a person of skill in the art that the output tensor for a layer group, and thus $B_o$ is controlled by the last layer of the layer group. Accordingly, in equation (13) $C_{out}$, $H_{out}$, $x'_{out}$, and $W_{out}$ are parameters of the output tensor for the last layer of the layer group. For example, if the last layer of the layer group is a pooling layer then $C_{out}$, $H_{out}$, $x'_{out}$, and $W_{out}$ are parameters of the output tensor of the pooling layer. As is known to those of skill in the art, the burst size is the maximum amount of data that can be written to or read from external memory at a time. In some cases, the burst size may be 128 bytes.

$$B_o = \left\lceil \frac{C_{out}}{I_o} \right\rceil \times H_{out} \times \left\lceil \frac{x'_{out} \times I_o}{BS} \right\rceil \times \left\lceil \frac{W_{out}}{x'_{out}} \right\rceil \times BS \quad (13)$$

As described above, if the layer group comprises a convolutional layer, then to execute the layer group on the neural network accelerator the weights forming the filter kernel for the convolutional layer have to be loaded into the neural network accelerator from memory. As described above, for a 2D convolution, the filter kernel may be a 4D tensor that comprises $C_{out}^{conv}$ filters wherein each filter has a width $K_W$, height $K_H$ and $C_{in}$ channels. The bandwidth to load the weights into the neural network accelerator is a function of the execution order. Specifically, if the convolutional layer is executed in PFX order then each split of the filter kernel is loaded into the neural network accelerator once and may remain there for multiple consecutive hardware passes, and in each of those hardware passes the input data may change. Accordingly, when a convolutional layer is executed in PFX order, the weight or coefficient bandwidth is equal to the total number of weights in the filter kernel, which is represented by equation (14). Where there is a bias value associated with each output channel then an additional term (e.g., $C_{out}^{conv} \times \frac{bitdepth}{8}$) may be added to equation (14) to take into account the additional bandwidth to load in the biases.

$$B_C^{raw} = K_H \times K_W \times C_{in} \times C_{out}^{conv} \qquad (14)$$

In contrast, if the convolutional layer is executed in XPF order, then each split of the input tensor may be loaded into the neural network accelerator once and may remain there for multiple consecutive hardware passes, and in each of those hardware passes a different set of weights may be loaded into the neural network accelerator. Accordingly, when the convolutional layer is executed in XPF order each weight is loaded into the neural network accelerator *xsplits* times, wherein *xsplits* is the number of x-splits (i.e. *xsplits* = $\left\lceil \frac{W}{x'_{in}} \right\rceil$, wherein *W* is the width of the input tensor and $x'_{in}$ is the maximum number of columns of the input tensor per hardware pass). This is represented by equation (15). Where there is a bias value associated with each output channel then an additional term (e.g., $C_{out}^{conv} \times \frac{bitdepth}{8}$) may be added to equation (15) to take into account the additional bandwidth to load in the biases.

$$B_C^{raw} = \left\lceil \frac{W}{x'_{in}} \right\rceil \times (K_H \times K_W \times C_{in} \times C_{out}^{conv}) \qquad (15)$$

In some cases, the weights may be stored in the coefficient buffer in compressed form. For example, in some cases the weights may be compressed using the SPGC8 compression algorithm. Where the weights are stored in compressed form the weight bandwidth can be represented by equation (16) where $B_C^{raw}$ is equivalent to equation (14) or equation (15) (or a modified version thereof).

$$B_C = Compression\ rate \times B_C^{raw} \qquad (16)$$

While the bandwidth loss function may be adjusted (e.g., via equation (16)) to take into account the compression of the weights, in some cases the coefficient buffer constraint may not be adjusted to take into account the compression of the weights. However, this may leave the coefficient buffer under-utilised resulting in more hardware passes to execute a neural network. Accordingly, in other cases, in addition to adjusting the loss function to take into account the compression of the weights, the coefficient buffer constraint is also adjusted to take into account the compression of the weights. The inventors have found that this can reduce the number of f-splits and/or p-splits, which can reduce the number of hardware passes to execute a layer group.

For example, Table 1 shows the NNA utilisation, number of cycles, bandwidth and number of hardware passes to execute different neural networks when (1) the split parameters are selected in accordance with the method of FIG. 6, (2) the weights are compressed, and (3) both the loss function and the coefficient buffer constraint take into account the weight compression. The improvements of these parameters over executing the neural networks when the split parameters are selected in accordance with FIG. 6 and only the loss function takes into account the compression of the weights are also shown in Table 1. For example, adjusting the coefficient buffer constraint to take into account the compression of the weights reduces the number of hardware passes to execute the ResNet V1 50 network by 26%.

Table 1

| Neural Network | NNA Utilisation | Cycles (Mcycle) | BW (MB) | Number of Hardware Passes |
|---|---|---|---|---|
| ResNet V1 50 1080x1080x3 input | 44.20 % +3.13% or 1.076x | 47.33 -7% | 769.5 -11.9 % | 230 -26% |
| FCRN 1280x800x3 input | 53.78% +4.8% or 1.099x | 107.04 -9.6% | 1783 -10.9% | 641 -14.5% |
| Inception v1 1024x1024x3 input | 43.13% +1.85% or 1.045x | 20.44 -4.49% | 239.99 -2.76% | 110 -6.7% |
| Mobilenet v2 1080x1920x3 input | 17.97% | 39.15 -0.6% | 730 -0.7% | 532 -0.3% |

As described above, when a layer group includes a convolutional layer and there is a p-split of the input tensor, then each hardware pass will only produce a partial convolutional layer output that has to be combined with one or more other partial convolutional outputs. For example, if a 2 × 2 × 4 ($K_W \times K_H \times C_{in}$) filter is convolved with an input tensor with four planes or channels and there is a p-split such that each hardware pass only receives two channels worth of the input tensor, then in one hardware pass the first two channels of the filter are convolved with the first two channels of the filter kernel, and at the end of the hardware pass the partial results are written out to memory. In a subsequent hardware pass the last two channels of the filter kernel are convolved with the last two channels of the input tensor to generate second partial results, and the first partial results are loaded into the accumulation buffer from memory and combined with the second partial results. Accordingly, for each tensel of the convolution computation output tensor there will be (*psplits* - 1) partial results which have to be written out to memory from the accumulation buffer, and subsequently loaded back into the accumulation buffer. Since there will be $W_{out}^{conv} \times C_{out}^{conv} \times H_{out}^{conv}$ tensels in the convolutional layer output tensor and $psplits = \left\lceil \frac{C_{in}}{p'} \right\rceil$, the total accumulation buffer bandwidth $B_{acc}$ can be expressed as shown in equation (17), where *pt* is the number of bytes that data written to or from memory data aligns to (this is set by the NNA configuration). In some cases, *pt* may be equal to the memory burst size. However, in other cases *pt* may be a multiple (e.g., 2x) the memory burst size. For example, where the memory burst size is 128 bytes, *pt* may be 128 or 256. It can be seen that if there are no psplits, then the accumulation buffer bandwidth $B_{acc}$ is zero.

$$B_{acc} = \left( \left\lceil \frac{C_{in}}{p'} \right\rceil - 1 \right) \times 2 \times \left\lceil \frac{W_{out}^{conv} \times C_{out}^{conv} \times 4(Bytes)}{pt} \right\rceil \times pt \times H_{out}^{conv} \tag{17}$$

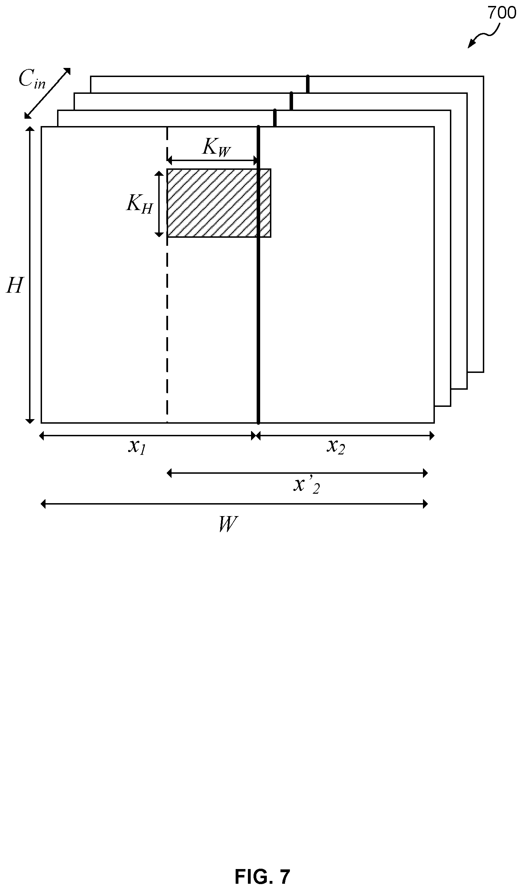

As described above, each layer group receives an input tensor (e.g., input tensor A or the main input tensor) and performs one or more operations on the input tensor to generate an output tensor. Where the layer group comprises a convolutional layer the bandwidth associated with loading the main input tensor into the neural network accelerator (i.e., $B_i^A$ ) will vary depending on (1) whether there are any x-splits (i.e. $x'_{in} \neq W$ ); and (2) the execution order (i.e. *o'*). Specifically, if there is an x-split then only a sub-set of the columns of the input tensor will be processed in any hardware pass. For example, as shown in FIG. 7, in a first hardware pass a first subset of columns (denoted $x_1$) of the input tensor 700 may be processed. However, one cannot simply then move to the next distinct subset of columns (denoted $x_2$) since in most cases the filter(s) will need to be convolved with a set of columns that fall within both $x_1$ and $x_2$. Accordingly, instead the next subset (denoted $x'_2$ in FIG. 7) will include a portion of the columns from the first subset of columns $x_1$ and the second subset of columns $x_2$. The amount of overlap between subsets will be based on the width of the convolutional filter ($K_W$) and the stride of the convolution in the width direction ($s_w$). In other words, there will be some overlap between column subsets. The bandwidth to load the overlap into the input buffer, per x-split, can be expressed by equation (18) where *ibs*1, *ibs*0 and *pad*$_{begin}$ are set out in equations (19), (20) and (21) respectively. Since there will be (*xsplits* - 1) overlapping pairs, wherein $xsplits = \left\lceil \frac{W_{out}^{conv}}{x'_{out}} \right\rceil$, the total bandwidth associated with the overlap for a layer group can be expressed by equation (22). As is known to those of skill in the art, the width ( $W_{out}^{conv}$ ) of the convolutional layer output tensor can be calculated in accordance with equation (23) wherein $P_w^-$ is the padding on the left, $P_w^+$ is the padding on the right and $s_w$ is the horizontal stride (i.e. the stride in the width $W$ direction).

$$D_{overlap-xsplit} = BS \times (ibs0 + 1 - ibs1) \times H_{in} \times \left\lceil \frac{C_{in}}{p'} \right\rceil \tag{18}$$

$$ibs1 = \frac{(x'_{out} \times s_w - pad_{begin}) \times p'}{BS} \tag{19}$$

$$ibs0 = \frac{(x'_{out} \times s_W - s_W - pad_{begin} + K_W) \times p' - 1}{BS} \quad (20)$$

$$pad_{begin} = \left\lceil \frac{\left(\left\lceil \frac{W_{in}}{s_W} \right\rceil - 1\right) \times s_W + K_W - W_{in}}{2} \right\rceil \quad (21)$$

$$D_{overlap-total} = \left(\left\lceil \frac{W^{conv}_{out}}{x'_{out}} \right\rceil - 1\right) \times D_{overlap-xsplit} \quad (22)$$

$$W^{conv}_{out} = \left\lfloor \frac{W_{in} + P^-_W + P^+_W - K_W}{s_W} + 1 \right\rfloor \quad (23)$$

Accordingly, the bandwidth associated with loading the main input tensor into the input buffer is the bandwidth associated with the input tensor itself (D as shown in equation (24)) plus the bandwidth associated with the overlap as shown in equation (25).

$$D = \left\lceil \frac{W_{in} \times p'}{BS} \right\rceil \times H_{in} \times \left\lceil \frac{C_{in}}{p'} \right\rceil \quad (24)$$

$$D_{tot} = D + D_{overlap-total} \quad (25)$$

As for the effect of the execution order on the main input tensor bandwidth, if the convolution operation is implemented in PFX order then the same weight data may be used in multiple consecutive hardware passes (i.e., so the weight data for those hardware passes only needs to be loaded into the coefficient buffer once) and the input data changes in each of those hardware passes. This is repeated for each filter. Accordingly, unless the entire input tensor can fit in the input buffer (i.e. *if D ≤ Ibuf*), and thus can remain in the input buffer for all hardware passes, the main input tensor and the overlap ($D_{tot}$) are loaded into the buffer F times where F is the number of filters in the filter kernel. It is noted that if the entire input tensor fits in the input buffer (i.e., *if D ≤ Ibuf*) then there will be no overlap (i.e., $D_{overlap-total}$ = 0). Specifically, if the entire input tensor fits in the input buffer, then there will be no x-splits (i.e., $x'_{in} = W_{in}$) which means that $x'_{out} = W_{out}$. It can be seen from equation (22) that if $x'_{out} = W^{conv}_{out}$ then $D_{overlap-total}$ = 0. Accordingly, if the entire input tensor fits into the input buffer, then the input tensor is only loaded into the input buffer once and a selected subset of the data therein can be used in each hardware pass.

In contrast, if the convolution operation is implemented in XPF order, then the same input data may be used in multiple consecutive hardware passes, and the weight data changes in each of those hardware passes. If all of the input data for a hardware pass fits in the input buffer at the same time (i.e. $p' \times H_{in} \times x'_{in} \leq Ibuf$) then the same input data can remain in the input buffer for multiple hardware passes and the main input tensor and the overlap ($D_{tot}$) are only loaded into the input buffer once. If, however, all of input data for a hardware pass does not fit in the input buffer at the same time (i.e. $p' \times H_{in} \times x'_{in} > Ibuf$) then during a hardware pass the input data for the hardware pass will be streamed to the input buffer such that during the hardware pass part of the input data for that hardware pass will overwrite another part of the input data for that hardware pass. This means that for each hardware pass, the input data for that hardware pass has to be loaded into the input buffer fresh (i.e., there is no input data reuse between hardware passes). Accordingly, where the execution order is XPF and all the input data for a hardware pass cannot be stored in the input buffer at the same time, the input tensor and the overlap ($D_{tot}$) are loaded into the input buffer F times where F is the number of filters in the filter kernel. This is expressed by equation (26).

$$B_i^A = Y_{XPF} \times (U'_i \times F + U_i) \times D_{tot} + Y_{PFX} \times (V'_i \times F + V_i) \times D_{tot} \qquad (26)$$

$$\text{s.t. } Y_{PFX} + Y_{XPF} = 1$$

$$\text{s.t. } Y_{PFX} , \ Y_{XPF} \in \{0,1\}$$

$$\text{s.t. } U_i + U'_i = 1$$

$$\text{s.t. } V_i + V'_i = 1$$

$$\text{s.t. } K_W \times x'_{in} \times p' \le Ibuf$$

$$V_i = \begin{array}{ll} 1 & if \ D \le Ibuf \\ 0 & O.W. \end{array}$$

$$U_i = \begin{array}{ll} 1 & if \ p' \times H_{in} \times x'_{in} \ \le Ibuf \\ 0 & O.W. \end{array}$$

Although the above method for determining the bandwidth associated with loading the main input tensor for a layer group into the NNA has been described for a layer group where the first layer of the group is a convolutional layer, it will be evident that the same method can be used to determine the bandwidth associated with loading the main input tensor for any layer group into the NNA. However, if the first layer of the layer group is a pooling layer then the convolution parameters are replaced with the corresponding pooling parameters (e.g. $K_W$ is replaced with $K_W^{pool}$ ); and if another layer (e.g. normalisation layer or an activation layer) is the first layer in a layer group then the overlap will be zero and $K_W$ is replaced with 1.

Finally, as described above, a layer group may comprise an element-wise operations layer in which the same operation (e.g., multiplication, addition, division) is performed on each tensel of the input tensor to the element-wise computation. In some cases, the element-wise operation is performed using a secondary input tensor which is loaded into the neural network accelerator. For example, the secondary tensor may comprise one value per tensel of the input tensor which is combined therewith (e.g., via multiplication, addition, division). The bandwidth associated with the secondary input tensor (e.g. input tensor B) is based on the size of the secondary tensor (the secondary tensor has a width $W_{in}^B$ , a height $H_{in}^B$ and $C_{in}^B$ channels), the interleaving ( $I_i^B$ ) of that tensor, and the number of columns of the secondary input tensor per hardware pass ( $x'^B_{in}$ ) as shown in equation (27).

$$B_i^B = \left\lceil \frac{C_{in}^B}{I_i^B} \right\rceil \times H_{in}^B \times \left\lceil \frac{x'^B_{in} \times I_i^B}{BS} \right\rceil \times \left\lceil \frac{W_{in}^B}{x'^B_{in}} \right\rceil \times BS \qquad (27)$$

As described above with respect to FIG. 3, the input tensor to the element-wise computation and the secondary input tensor may have different dimensions. When the dimensions of the input tensor to the element-wise computation are different from the dimensions of the secondary input tensor then a broadcast operation may be performed to expand one or more dimensions of the smaller tensor. For example, if the main input tensor to the element-wise operation is 8 × 8 × 8 ($W \times H \times C_{in}$) and the secondary input tensor has dimensions 8 × 8 × 1 then the single channel of the secondary input tensor may be broadcast (e.g. copied) 8 times so that the secondary input tensor is treated as having 8 channels. Where the dimensions of the input tensor to the element-wise operation and the dimensions of the secondary input tensor are the same (i.e. no broadcasting) and the element-wise operations layer is preceded by a convolutional layer then the number of columns in the output of the convolutional layer will be equal to the number of columns in the input to the element-wise operations layer (i.e. $x'_{out} = x'^B_{in}$) and the number of planes/channels in the output of the convolutional layer will be equal to the number of planes/channels in the input of the element-wise operations layer (i.e.

$C_{out} = C^B_{in}$).

The total bandwidth to execute a neural network on the neural network accelerator can then be expressed as the sum of the bandwidths for each layer group as shown in equation (28). Since the bandwidth for a layer group can be expressed as a function of the split-parameters this allows the total bandwidth for the neural network to be expressed as a function of the split-parameters. A software tool can then be used to select the split-parameters that minimize equation (28).

$$BW = \sum_L BW^L \quad (28)$$

**Example 2 - Performance Metric = Cycles**

In a second example, the neural network accelerator performance metric used to select the split parameters is the number of cycles (e.g., clock cycles) to execute the neural network on the neural network accelerator.

When the performance metric is cycles, block 602 of the method 600 FIG. 6 comprises obtaining or generating a model (e.g. loss function) that represents the number of cycles to execute a generic layer group on the neural network accelerator as a function of the split parameters (which may be referred to herein as the cycle model for a layer group); and block 604 comprises generating a model (e.g. loss function) that represents the number of cycles to execute a specific neural network (which may be referred to herein as the cycle model for the neural network) based on the cycle model for a layer group; and block 606 comprises selecting the split parameters for the layer groups that minimize the loss function for the neural network under the neural network accelerator constraints.

The inventors have identified that the number of cycles to execute a layer group on a neural network accelerator ($E_c$) can be accurately estimated as a function of the total number of operations that are performed for the layer group and the maximum attainable number of operations that can be completed per cycle by the neural network accelerator for that layer group as shown in equation (29).

$$E_c \cong \frac{Operations\ in\ a\ layer\ group\ (MAC)}{Max\ attainable\ operation\ per\ cycle\left(\frac{MAC}{Cycle}\right)} \quad (29)$$

The operations in a layer group can be expressed as a sum of the separate operations that are performed for that layer group. Accordingly, generating the cycle model for a layer group may comprise identifying the distinct operations that may be performed in a layer group. For example, a layer group for the example neural network accelerator of FIG. 3 can comprise one or more of convolution operations, element-wise operations, activation operations, pooling operations, normalisation operations, and output interleaver operations. Since many modern neural networks do not comprise normalisation operations, to simplify the examples below it will be assumed that a layer group does not comprise normalisation operations. Also, the output interleaver operations have been deemed to have a negligible effect on the number of cycles so the number of cycles associated with any output interleaver operations will be disregarded in the examples below. Accordingly, in the examples below, the operations performed for a layer group can be expressed as the sum of the convolution operations ($OP_{conv}$), activation operations ($OP_{act}$), element-wise operations ($OP_{eltwise}$), and pooling operations ($OP_{pool}$) as shown in equation (30). If a layer group does not have one of these operations, then the corresponding operations parameter is zero. For example, if a layer group does not comprise pooling operations (i.e., a layer group does not have a pooling layer), then $OP_{pool}$ will be zero. It will be evident to a person of skill in the art that equations similar to equation (30) can be generated for other neural networks and other neural network accelerators where the layer groups can comprise a different set of operations. For example, in other examples, equation (30) may have a normalisation operations term ($OP_{norm}$) and/or an output interleave operations term ($OP_{interlv}$),

$$Operations\ in\ a\ layer\ group = OP_{tot} = OP_{conv} + OP_{act} + OP_{eltwise} + OP_{pool} \quad (30)$$

Each operations parameter ($OP_{conv}$, $OP_{act}$, $OP_{eltwise}$, $OP_{pool}$) can be expressed as a function of the size of the tensor in the layer/operation as shown in equations (31) to (34). Specifically, in equations (31) to (34) $C_{in}$ is the number of channels in the input tensor for a layer/operation, $K_H$ is the height of a filter for the layer/operation, $K_W$ is the width of a filter for the layer/operation, $C_{out}$ is the number of channels in the output tensor for the layer/operation, $H_{out}$ is the height of the output tensor for the layer/operation, and $W_{out}$ is the width of the output tensor for the layer/operation.

$$OP_{conv} = K_H \times K_W \times C_{in}^{conv} \times C_{out}^{conv} \times H_{out}^{conv} \times W_{out}^{conv} \quad (31)$$

$$OP_{eltwise} = C_{in}^{eltwise} \times H_{out}^{eltwise} \times W_{out}^{eltwise} \quad (32)$$

$$OP_{act} = C_{in}^{act} \times H_{out}^{act} \times W_{out}^{act} \quad (33)$$

$$OP_{pool} = K_H^{pool} \times K_W^{pool} \times C_{in}^{pool} \times H_{out}^{pool} \times W_{out}^{pool} \quad (34)$$

The inventors have determined that the number of cycles to execute a layer group on a neural network accelerator can be more accurately represented if the number of cycles is determined differently based on whether the operations for the layer group are bandwidth bound, or computation bound. Specifically, the maximum attainable operations per cycle will be different based on whether the layer group is bandwidth bound or computation bound. In particular, a neural network accelerator will have a maximum number of multiply-accumulate (MAC) operations it can perform per cycle (e.g., peak MAC/cycle). However, this may not always be attainable due to bandwidth restrictions. When the attainable MAC/cycle is constrained by the bandwidth, the maximum MAC/cycle will be proportional to the peak bandwidth (in GB/cycle).

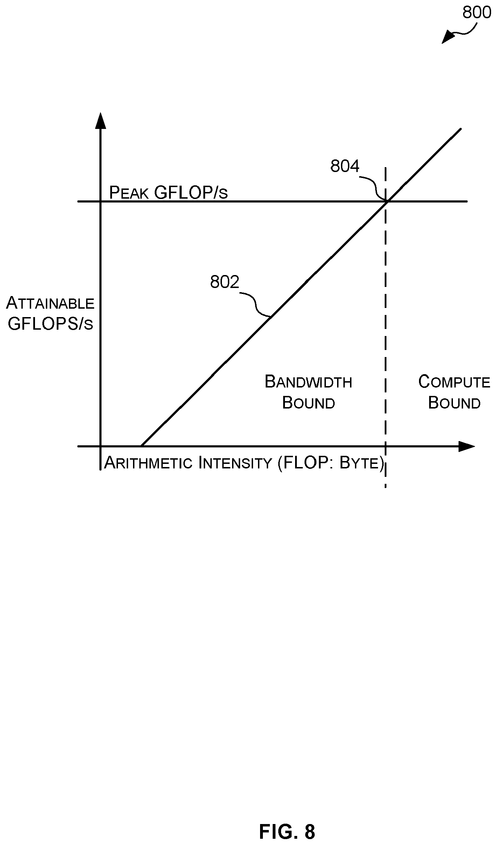

A roofline model can be used to determine whether a layer group is bandwidth bound or computation bound. As shown in FIG. 8 a traditional roofline model 800 plots FLOP (floating point operations) performance as a function of hardware peak performance (Peak GFLOPS/s), machine peak bandwidth (Peak Bandwidth GB/s) and arithmetic intensity (AI) (which is identified by 802). To determine whether a computation is compute bound or bandwidth bound the knee point 804 of the plot is determined. The knee point 804 is the minimum AI which allows the hardware to operate at the peak GFLOP/second.

The roofline model concept can be used to determine whether a layer group is bandwidth bound or computation bound by plotting the MAC performance of the neural network accelerator as a function of the neural network accelerator peak performance (maximum attainable peak MAC/cycle for a layer group), neural network accelerator peak bandwidth (Peak Bandwidth GB/cycles) and arithmetic intensity. The AI for a layer group can be expressed as the number of MAC operations for the layer group ($Op_{tot}$) divided by the number of bytes transferred for the layer group ($BW_{tot}$) as shown in equation (35). The total number of bytes transferred for a layer group ($BW_{tot}$) may be calculated as described above with respect to the bandwidth performance metric example.

$$AI \left( \frac{\text{mac ops}}{\text{Byte}} \right) = \frac{\# \, Operations \, in \, single \, layer \, group}{\# \, Bytes \, transferred} = \frac{OP_{tot}}{BW_{tot}} \quad (35)$$

The knee point is defined as the minimum AI which allows the neural network accelerator to operate at the maximum attainable peak MAC/cycle for the layer group. The knee point for a layer group may be expressed as the theoretical maximum or peak number of MAC/s ( $PEAK \left( \frac{Ops}{s} \right) \times freq$ ) of the neural network accelerator divided by the data rate ( $DDR \left( \frac{B}{s} \right)$ ) multiplied by the utilisation (*utilisation* (*Available MAC*)) as shown in equation (36), where *freq* is the frequency under which the neural network accelerator operates, *DDR* is the double data rate (i.e. the rate at which data can be transferred into the neural network accelerator), $O_{mac}$ is the number operations that can be performed per cycle by a convolution engine, and $C_{eng}$ is the number of convolution engines. Where a layer group comprises a convolution engine and each convolution engine comprises 128 multipliers then $O_{mac}$ may be equal to 128 when operating in single operation mode or 256 when operating in twin operation mode. In contrast, where a layer group comprises a pooling layer or an element-wise operations layer, but not a convolutional layer then $O_{mac}$ reduces to 1. In some cases, $O_{mac}$ may be constant for a layer group such that if $O_{mac}$ is 256 for a convolutional layer then it will be 256 for all layers in the same layer group as the convolutional layer.

$$Per-layer\ group\ knee\ point\ \left(\frac{Ops}{B}\right) = utilisation\ (Available\ MAC) \times \frac{PEAK\left(\frac{Ops}{S}\right) = O_{mac} \times C_{eng} \times freq}{DDR\left(\frac{B}{S}\right)}$$

(36)

In many cases it may not be possible for the neural network accelerator to operate at the theoretical peak number of MAC/s because, for example, the bandwidth and computing time may overlap, or certain hardware configurations may be limiting. The utilisation can be estimated as the theoretical number of cycles to execute the layer group ( $\frac{OP_{tot}}{O_{mac} \times C_{eng}}$ ) divided by the estimated number of cycles to execute the layer group in practice ( $E_c'$ ) as shown in equation (37).

$$utilisation\ (Available\ MAC) = \frac{\#cycles\ in\ theory}{\#cycles\ in\ practice} = \frac{OP_{tot}}{O_{mac} \times C_{eng} \times E_c'} \quad (37)$$

The estimated number of cycles to execute a layer group in practice ( $E_c'$ ) can be represented as the sum of the estimated number of cycles to execute each type of operation in the layer group. Where the layer groups for a neural network accelerator, such as the neural network accelerator shown in FIG. 3, may comprise one or more of convolution operations, activation operations, pooling operations and element-wise operations the estimated total number of cycles to execute a layer group when it is split into hardware passes can be expressed as the sum of the number of cycles to execute the convolution operations ( $E_C^{conv}$ ), the number of cycles to execute the element-wise operations ( $E_C^{eltwise}$ ), the number of cycles to execute the pooling operations ( $E_C^{pooling}$ ), and the number of cycles to execute the activation operations ( $E_C^{act}$ ) as shown in equation (38). It will be evident to a person of skill in the art that this is an example only and that equation (38) may be amended to accommodate layer groups that can have fewer operations, more operations, and/or a different set of operations.

$$E_C' = E_C^{conv} + E_C^{eltwise} + E_C^{pool} + E_C^{act} \quad (38)$$

Each cycles parameter ( $E_C^{conv}, E_C^{eltwise}, E_C^{pool}, E_C^{act}$ ) can be expressed as a function of the split parameters. Specifically, each cycles parameter can be expressed as the number of cycles per hardware pass * the number of hardware passes. Since the number of x-splits can be expressed as $\left\lceil \frac{W_{out}}{x_{out}'} \right\rceil$ , the number of p-splits can be expressed as $\left\lceil \frac{C_{in}/G}{p'} \right\rceil$ where G is the number of groups in a group convolution (for a standard 2D convolution $G = 1$), and the number of f-splits can be expressed as $\left\lceil \frac{C_{out}}{f'} \right\rceil$ , the total number of hardware passes can be expressed as $\left\lceil \frac{W_{out}}{x_{out}'} \right\rceil \times \left\lceil \frac{C_{in}/G}{p'} \right\rceil \times \left\lceil \frac{C_{out}}{f'} \right\rceil$ . For a convolutional layer, it will take $K_H \times K_W \times p'$ operations to generate an output element for a hardware pass. Where a neural network accelerator, such as the neural network accelerator of FIG. 3 comprises one or more convolution engines which can perform $O_{mac}$ operations per cycle. Then the number of cycles to generate an output element can be expressed as $\left\lceil \frac{K_H \times K_W \times p'}{O_{mac}(\#\ operations\ per\ cycle)} \right\rceil$ . Each hardware pass $H_{out} \times x_{out}' \times f'$ output elements will be generated. However, if a neural network accelerator, such as the neural network accelerator of FIG. 3, has multiple (i.e., $C_{eng}$) convolution engines then up to $C_{eng}$ output elements can be generated per cycle. Accordingly, the number of cycles per hardware pass can be expressed as $H_{out} \times \left\lceil \frac{x'_{out}}{C_{eng}} \right\rceil \times \left\lceil \frac{K_H \times K_W \times p'}{O_{mac}(\# \, operations \, per \, cycle)} \right\rceil \times f'$. Therefore, the number of cycles to execute the convolution operations for a layer group ( $E_C^{conv}$ ) can be expressed as shown in equation (39).

$$E_C^{conv} = H_{out} \times \left\lceil \frac{W_{out}}{x'_{out}} \right\rceil \times \left\lceil \frac{x'_{out}}{C_{eng}} \right\rceil \times \left\lceil \frac{K_H \times K_W \times p'}{O_{mac}(\# \, operations \, per \, cycle)} \right\rceil \times \left\lceil \frac{C_{in}/G}{p'} \right\rceil \times \left\lceil \frac{C_{out}}{f'} \right\rceil \times f' \quad (39)$$

Similarly, the number of operations to generate an output element for a hardware pass for an element-wise operation or an activation operation is equal to $1 \times 1 \times p'$. Therefore, the number of cycles to execute the element-wise operations for a layer group ( $E_C^{eltwise}$ ) and the number of cycles to execute the activation operations for a layer group ( $E_C^{act}$ ) can be expressed as shown in equations (40) and (41) respectively. Finally, the number of operations to generate an output element for a hardware pass for a pooling operation is equal to $K_H^{pool} \times K_W^{pool} \times p'$. Therefore, the number of cycles to execute the pooling operations for a layer group can be expressed as shown in equation (42).

$$E_C^{eltwise} = H_{out} \times \left\lceil \frac{W_{out}}{x'_{out}} \right\rceil \times \left\lceil \frac{x'_{out}}{C_{eng}} \right\rceil \times \left\lceil \frac{1 \times 1 \times p'}{O_{mac}} \right\rceil \times \left\lceil \frac{C_{in}/G}{p'} \right\rceil \times \left\lceil \frac{C_{out}}{f'} \right\rceil \times f' \quad (40)$$

$$E_C^{act} = H_{out} \times \left\lceil \frac{W_{out}}{x'_{out}} \right\rceil \times \left\lceil \frac{x'_{out}}{C_{eng}} \right\rceil \times \left\lceil \frac{1 \times 1 \times p'}{O_{mac}} \right\rceil \times \left\lceil \frac{C_{in}/G}{p'} \right\rceil \times \left\lceil \frac{C_{out}}{f'} \right\rceil \times f' \quad (41)$$

$$E_C^{pool} = H_{out} \times \left\lceil \frac{W_{out}}{x'_{out}} \right\rceil \times \left\lceil \frac{x'_{out}}{C_{eng}} \right\rceil \times \left\lceil \frac{K_H^{pool} \times K_W^{pool} \times p'}{O_{mac}} \right\rceil \times \left\lceil \frac{C_{in}/G}{p'} \right\rceil \times \left\lceil \frac{C_{out}}{f'} \right\rceil \times f' \quad (42)$$

In equations (39) to (42) $H_{out}$, $W_{out}$, $x'_{out}$ and $C_{out}$ are parameters of the output tensor of the corresponding layer. For example, in equation (39) $H_{out}$, $W_{out}$, $x'_{out}$ and $C_{out}$ are parameters of the output tensor of the convolutional layer, and in equation (40) $H_{out}$, $W_{out}$, $x'_{out}$ and $C_{out}$ are parameters of the output tensor of the activation layer.

Where a layer group comprises only convolution operations (e.g., the layer group only comprises a convolutional layer) the calculation of the utilisation may be simplified. For example, where a layer group comprises only convolution operations, the utilisation for the layer group can be expressed as shown in equation (43), which can be disentangled into four terms (convolution engine utilisation ( $CE_{util}$ ), utilisation per convolution engine ( $ENG_{util}$ ), output utilisation ( $OUT_{util}$ ), and AI utilisation ($AI_{util}$)) as shown in equation (44).

$$Utilisation = \frac{K'_h \times K'_w \times C_{in} \times C_{out} \times W_{out}}{O_{mac} \times C_{eng} \times \left\lceil \frac{W_{out}}{x'_{out}} \right\rceil \times \left\lceil \frac{x'_{out}}{C_{eng}} \right\rceil \times \left\lceil \frac{K'_h \times K'_w \times p'}{O_{mac}(\# \, operations \, per \, cycle)} \right\rceil \times \left\lceil \frac{C_{in}}{G} \right\rceil \times \left\lceil \frac{C_{out}}{f'} \right\rceil \times f'} \times AI_{util} \quad (43)$$

$$Utilisation = \frac{\frac{W_{out}}{C_{eng}}}{\left\lceil \frac{W_{out}}{x'_{out}} \right\rceil \times \left\lceil \frac{x'_{out}}{C_{eng}} \right\rceil} (CE_{util}) \times \frac{K'_h \times K'_w \times \frac{C_{in}}{O_{mac}}}{\left\lceil \frac{K'_h \times K'_w \times p'}{O_{mac}(\# \, operations \, per \, cycle)} \right\rceil \times \left\lceil \frac{C_{in}}{p'} \right\rceil} (ENG_{util}) \times$$

$$\frac{\frac{C_{out}}{f'}}{\left\lceil \frac{C_{out}}{f'} \right\rceil} (OUT_{util}) \times \frac{\min(AI, AI_{knee})}{AI_{knee}} (AI_{util}) \quad (44)$$

As described above, once the AI and knee point have been determined for a layer group, it is determined whether the layer group is computation bound or bandwidth bound. Specifically, if the AI is greater than the knee point then the layer group is computebound and if the AI is less than or equal to the knee point then the layer group is bandwidth bound. If a layer group is computation bound, then the max attainable operations per cycles is equal to the peak MAC/cycle * utilisation. In contrast, if a layer group is bandwidth bound then the max attainable MAC/cycle is equal to $\frac{AI\left(\frac{Flop}{B}\right) \times DDR\left(\frac{Peak \, B}{Sec}\right)}{Freq\left(\frac{cycle}{Sec}\right)}$. This is shown in equation (45).

$$Max \, attainable \, operation \, per \, cycle \left(\frac{FLOP}{Cycle}\right) =$$

$$min \begin{cases} utilisation \times O_{mac} \times C_{eng} \left(\frac{Peak \, FLOP}{Cycle}\right) & [if \, AI > knee \, point \rightarrow Computation \, bound] \\ \frac{AI\left(\frac{Flop}{B}\right) \times DDR\left(\frac{Peak \, B}{Sec}\right)}{Freq\left(\frac{cycle}{Sec}\right)} & [if \, AI \leq knee \, point \rightarrow Bandwidth \, bound] \end{cases} \quad (45)$$

The total number of cycles to execute a neural network on the neural network accelerator can then be expressed as the sum of the number of cycles for each layer group as shown in equation (46). Since, as described above, the number of cycles to execute a layer group on the neural network accelerator can be expressed as a function of the split-parameters this allows the total number of cycles to execute the neural network on the neural network accelerator to be expressed as a function of the split-parameters. A software tool can then be used to select the split-parameters that minimize equation (46).

$$Total \, Cycle = \sum_L Cycle_L \quad (46)$$

**Test Results**

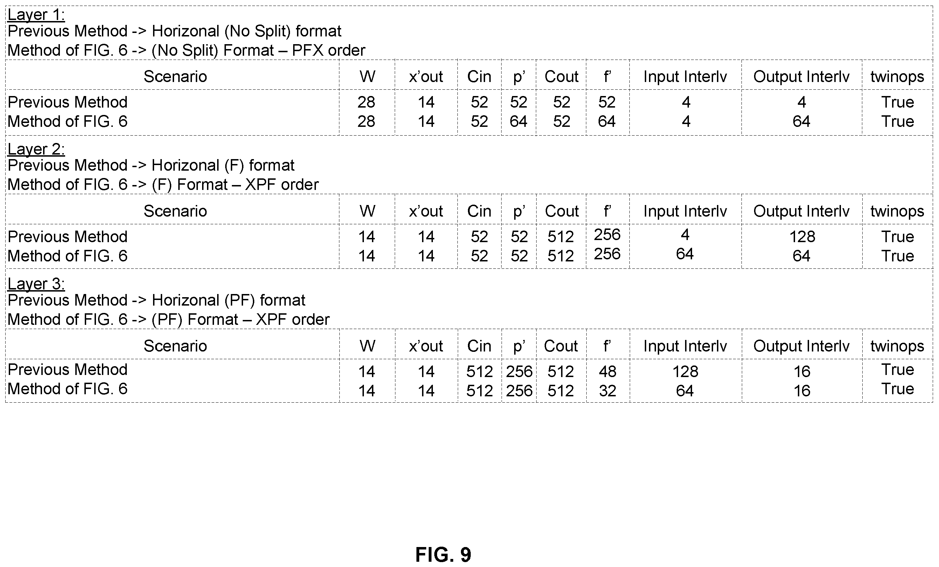

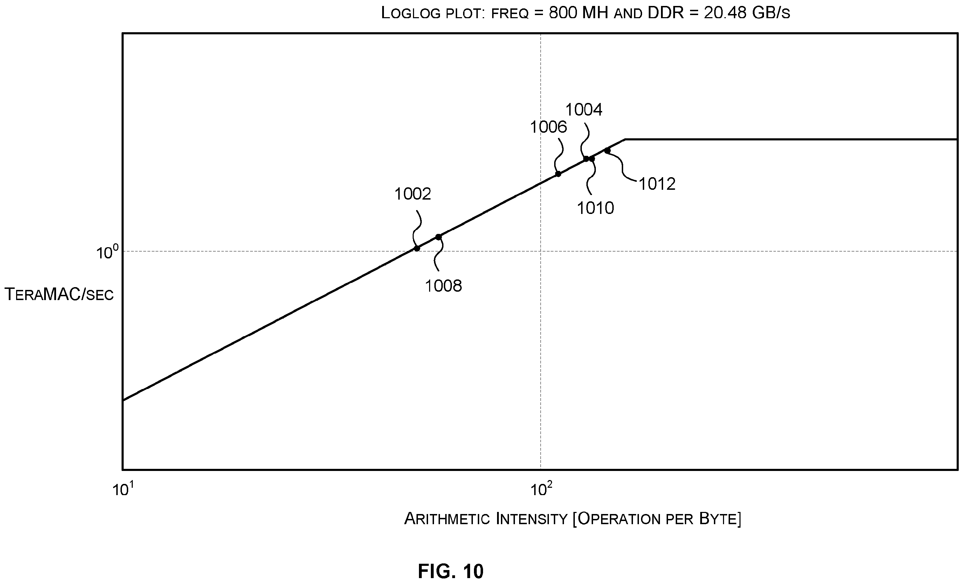

Reference is now made to FIGS. 9 and 10 which illustrate the split parameters for a first example neural network (i) selected in accordance with the method 600 of FIG. 6 (where the performance metric is cycles and a roofline model is used); and (ii) selected in accordance with the previous split method described above, and the results of executing the first example neural network on the neural network accelerator of FIG. 3 using the split parameters from (i) and (ii). The first example neural network comprises three convolutional layers (Layer 1, Layer 2, Layer 3), each of which forms a separate layer group.

FIG. 9 illustrates the split parameters that were selected by both methods for each layer. It can be seen that both methods selected no input data splits for layer 1. However, the method 600 of FIG. 6 selected an output interleave value of 64, whereas the previous split method only selected an output interleave value of 4 for layer 1. For layer 2, both the previous split method and the method 600 of FIG. 6 selected an f-split of 256 (i.e., 2 f-splits). The two methods also selected different output interleave values of 128 and 64. For layer 3, both the previous split method and the method 600 of FIG. 6 selected both a p split-and an f-split. Both methods selected a p-split of 256 (i.e., 2 p-splits), but the method 600 of FIG. 6 selected an f-split of 32 whereas the previous split method selected an f-split of 48.

Table 2 below shows the number of cycles and utilisation of the neural network accelerator resources to execute the first example neural network on the neural network accelerator in accordance with the split parameters selected by the two methods. It can be seen that the split parameters selected in accordance with the method 600 of FIG. 6 significantly reduced the number of cycles and increased the utilisation to execute the first example neural network on the neural network accelerator compared to the split parameters selected in accordance with the previous split method.

Table 2

| | Previous Split Method | Method of FIG. 6 (performance metric - cycles, roofline model) | Improvement |
|---|---|---|---|
| Theoretical Number of Cycles to execute neural network | 182625 | 146633 | 19.7% |
| Actual Number of Cycles to execute neural network | 230779 | 194967 | 15.5% |
| Actual Utilisation | 54.39% | 64.38% | |

FIG. 10 illustrates the roofline model for the neural network accelerator of FIG. 3 and the maximum attainable operations/cycle for each layer of the first example neural network for the split parameters selected in accordance with the method 600 of FIG. 6 and the previous split method. In general, the higher the maximum attainable operations/cycle for a layer group the less cycles in which (and thus the more efficiently) a layer group can be executed. The maximum attainable operations/cycle for layers 1, 2 and 3 using the split parameters selected in accordance with the previous split method are shown at 1002, 1004 and 1006 respectively, and the maximum attainable operations/cycle for layers 1, 2 and 3 using the split parameters selected in accordance with the method 600 of FIG. 6 are shown at 1008, 1010, and 1012 respectively. It can be seen that for each layer of the first example neural network the split parameters selected in accordance with the method 600 of FIG. 6 improved (or did not change) the maximum attainable operation/cycles for that layer compared to the split parameters selected in accordance with the previous split method, thus improving (or maintaining) the efficiency of executing each layer on the neural network accelerator.

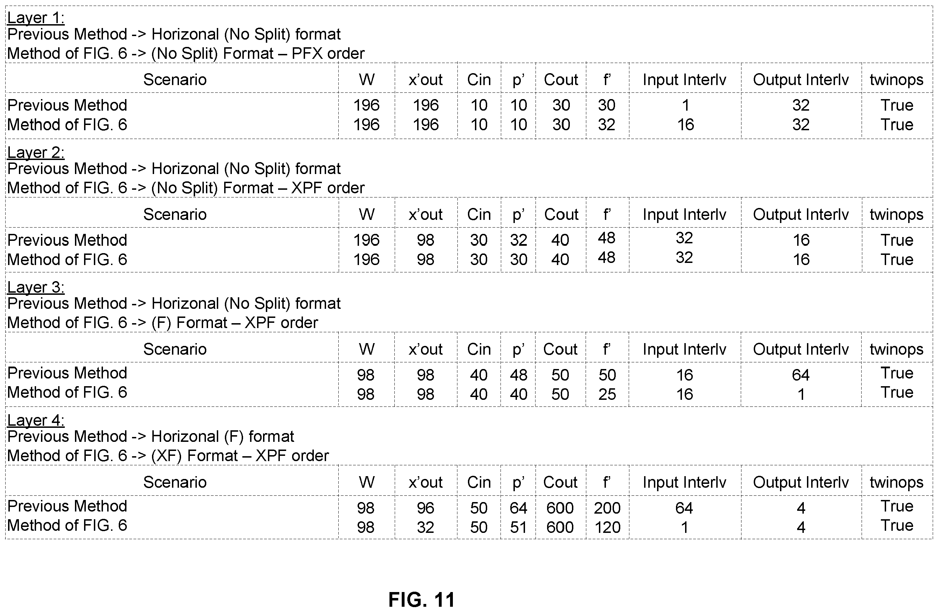

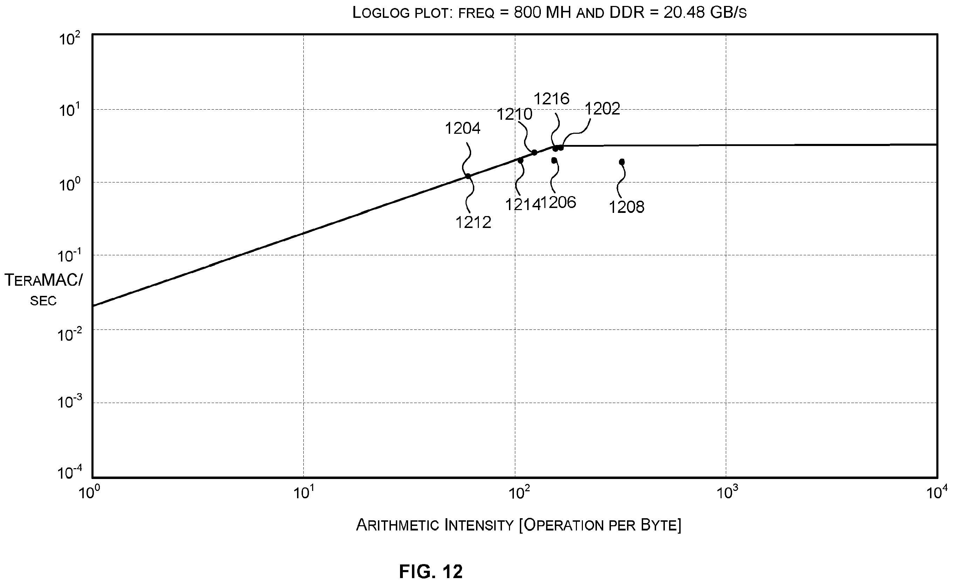

Reference is now made to FIGS. 11 and 12 which illustrate the split parameters for a second example neural network (i) selected in accordance with the method 600 of FIG. 6 (where the performance metric is cycles and a roofline model is used); and (ii) selected in accordance with the previous split method described above, and the results of executing the second example neural network on the neural network accelerator of FIG. 3 using the splits parameters from (i) and (ii). The second example neural network comprises four convolutional layers (Layer 1, Layer 2, Layer 3, and Layer 4) which each form a separate layer group.

FIG. 11 illustrates the split parameters that were selected by both methods for each layer. Specifically, it can be seen that both methods selected no input data splits for layer 1. However, the method 600 of FIG. 6 selected an input interleave value of 16, whereas the previous split method only selected an input interleave value of 1 for layer 1. For layer 2, both the previous split method and the method 600 of FIG. 6 selected no input layer splits and the same interleave values. For layer 3, the previous split method selected no input data splits and an output interleave value of 64, whereas the method 600 of FIG. 6 selected an f-split of 25 (i.e., 2 f-splits) and an output interleave value of 1. For layer 4, the previous split method selected an f-split of 200 (i.e., 3 f-splits), whereas the method 600 of FIG. 6 selected an f-split of 120 (i.e., 5 f-splits) and an x-split of 32.

Table 3 below shows the number of cycles and utilisation of the neural network accelerator resources to execute the second example neural network on the neural network accelerator in accordance with the split parameters selected by (i) and (ii). It can be seen that the split parameters selected in accordance with the method 600 of FIG. 6 significantly reduced the number of cycles and increased the utilisation to execute the second example neural network on the neural network accelerator compared to the split parameters selected in accordance with the previous split method.

Table 3

| | Previous Split Method | Method of FIG. 6 (performance metric = cycles, roofline model) | Improvement |
|---|---|---|---|
| Theoretical Number of Cycles to execute neural network | 1.2493e+06 | 0.90879e+06 | 27.2% |
| Actual Number of Cycles to execute neural network | 1.3472e+06 | 1.00053e+06 | 25.73% |
| Actual Utilisation | 55.32% | 74.49% | |

FIG. 12 illustrates the roofline model for the neural network accelerator of FIG. 3 and the maximum attainable operations/cycle for each layer of the second example neural network for the split parameters selected in accordance with the method 600 of FIG. 6 and the previous split method. As noted above, in general, the higher the maximum attainable operations/cycle for a layer group the less cycles in which (and thus the more efficiently) a layer group can be performed. The maximum attainable operations/cycle for layers 1, 2, 3 and 4 using the split parameters selected in accordance with the previous split method are shown at 1202, 1204, 1206 and 1208 respectively, and the maximum attainable operations/cycle for layers 1, 2, 3 and 4 using the split parameters selected in accordance with the method 600 of FIG. 6 are shown at 1210, 1212, 1214 and 1216 respectively. Compared to the first example neural network, the split parameters selected in accordance with the method 600 of FIG. 6 only improved the maximum attainable operations/cycle for the last layer (layer 4). For all other layers, the split parameters selected in accordance with the method 600 of FIG. 6 either reduced the maximum attainable operations/cycle or kept it the same (compared to the split parameters selected in accordance with the previous split method). However, since the last layer (layer 4) is the largest layer, it has the most effect on the number of cycles to execute the neural network. Accordingly, selecting the split parameters in accordance with the method 600 of FIG. 6 may, in some cases, reduce the efficiency of executing certain layers on the neural network accelerator, but still improve the efficiency of executing the neural network as a whole on the neural network accelerator.

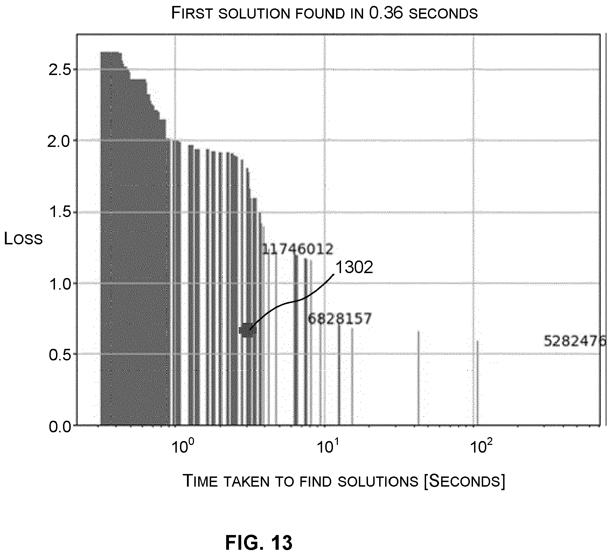

Reference is now made to FIG. 13 which shows a graph of the time taken, using the method 600 of FIG. 6 (where the performance metric is cycles, and a roofline model is used) to select the split parameters for the first 18 layers of the VGG (Visual Geometry Group) 16 neural network. The method 600 of FIG. 6 finds the first feasible solution in only 0.36 seconds and the optimum solution in 496 seconds. In contrast, it took 4.602 seconds to select the split parameters in accordance with the previous split method (this is shown at 1302). Table 4 shows the number of cycles to execute the first 18 layers of the VGG 16 neural network using the split parameters selected by the two methods. Accordingly, not only can the methods described herein result in a more efficient execution of a neural network on a neural network accelerator, but they can also produce a feasible set of split parameters more quickly.

Table 4

| Theory result | Method of FIG. 6 (performance metric = cycles, roofline model) | Previous Split Method |
|---|---|---|
| Number of Cycles | 5.282475e+06 | 5.75549e+06 |

FIG. 14 illustrates various components of an exemplary computing-based device 1400 which may be implemented as any form of a computing and/or electronic device, and in which embodiments of the methods described herein may be implemented.

Computing-based device 1400 comprises one or more processors 1402 which may be microprocessors, controllers or any other suitable type of processors for processing computer executable instructions to control the operation of the device in order to implement any of the methods described herein. In some examples, for example where a system on a chip architecture is used, the processors 1402 may include one or more fixed function blocks (also referred to as accelerators) which implement a part of a method described herein (rather than software or firmware). Platform software comprising an operating system 1404 or any other suitable platform software may be provided at the computing-based device to enable application software to be executed on the device.

The computer executable instructions may be provided using any computer-readable media that is accessible by computing-based device 1400. Computer-readable media may include, for example, computer storage media such as memory 1406 and communications media. Computer storage media (i.e., non-transitory machine-readable media), such as memory 1406, includes volatile and non-volatile, removable and nonremovable media implemented in any method or technology for storage of information such as computer readable instructions, data structures, program modules or other data. Computer storage media includes, but is not limited to, RAM, ROM, EPROM, EEPROM, flash memory or other memory technology, CD-ROM, digital versatile disks (DVD) or other optical storage, magnetic cassettes, magnetic tape, magnetic disk storage or other magnetic storage devices, or any other non-transmission medium that can be used to store information for access by a computing device. In contrast, communication media may embody computer readable instructions, data structures, program modules, or other data in a modulated data signal, such as a carrier wave, or other transport mechanism. As defined herein, computer storage media does not include communication media. Although the computer storage media (i.e., non-transitory machine-readable media, e.g., memory 1406) is shown within the computing-based device 1400 it will be appreciated that the storage may be distributed or located remotely and accessed via a network or other communication link (e.g., using communication interface 1408).

The computing-based device 1400 also comprises an input/output controller 1810 arranged to output display information to a display device 1412 which may be separate from or integral to the computing-based device 1400. The display information may provide a graphical user interface. The input/output controller 1410 is also arranged to receive and process input from one or more devices, such as a user input device 1414 (e.g., a mouse or a keyboard). This user input may be used to initiate configuration of a neural network accelerator. In an embodiment the display device 1412 may also act as the user input device 1414 if it is a touch sensitive display device. The input/output controller 1410 may also output data to devices other than the display device, e.g., a locally connected printing device (not shown in FIG. 14).

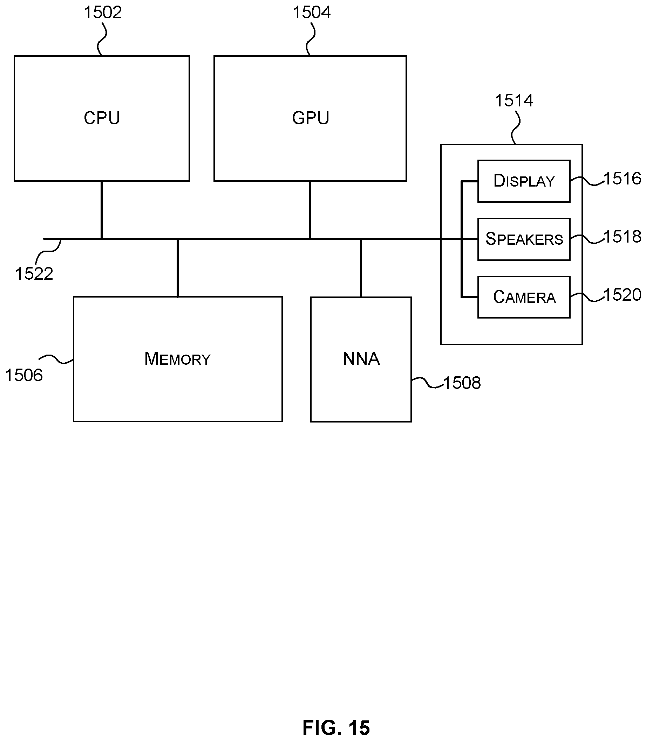

FIG. 15 shows a computer system in which the neural network accelerators (or other hardware configurable to execute a neural network) described herein may be implemented. The computer system comprises a CPU 1502, a GPU 1504, a memory 1506, a neural network accelerator (NNA) 1508 (which may correspond to the NNA 300 of FIG. 3) and other devices 1514, such as a display 1516, speakers 1518 and a camera 1520. In other examples, one or more of the depicted components may be omitted from the system, and/or the NNA 1508 may be implemented on the CPU 1502 or within the GPU 1504. The components of the computer system can communicate with each other via a communications bus 1522.

The neural network accelerator 300 of FIG. 3 is shown as comprising a number of functional blocks. This is schematic only and is not intended to define a strict division between different logic elements of such entities. Each functional block may be provided in any suitable manner. It is to be understood that intermediate values described herein as being formed by a block or unit need not be physically generated by the block or unit at any point and may merely represent logical values which conveniently describe the processing performed by the neural network accelerator between its input and output.

The neural network accelerators described herein may be embodied in hardware on an integrated circuit. The neural network accelerators described herein may be configured to perform any of the methods described herein. Generally, any of the functions, methods, techniques or components described above can be implemented in software, firmware, hardware (e.g., fixed logic circuitry), or any combination thereof. The terms "module," "functionality," "component", "element", "unit", "block" and "logic" may be used herein to generally represent software, firmware, hardware, or any combination thereof. In the case of a software implementation, the module, functionality, component, element, unit, block or logic represents program code that performs the specified tasks when executed on a processor. The algorithms and methods described herein could be performed by one or more processors executing code that causes the processor(s) to perform the algorithms/methods. Examples of a computer-readable storage medium include a randomaccess memory (RAM), read-only memory (ROM), an optical disc, flash memory, hard disk memory, and other memory devices that may use magnetic, optical, and other techniques to store instructions or other data and that can be accessed by a machine.

The terms computer program code and computer readable instructions as used herein refer to any kind of executable code for processors, including code expressed in a machine language, an interpreted language or a scripting language. Executable code includes binary code, machine code, bytecode, code defining an integrated circuit (such as a hardware description language or netlist), and code expressed in a programming language code such as C, Java or OpenCL. Executable code may be, for example, any kind of software, firmware, script, module or library which, when suitably executed, processed, interpreted, compiled, executed at a virtual machine or other software environment, cause a processor of the computer system at which the executable code is supported to perform the tasks specified by the code.

A processor, computer, or computer system may be any kind of device, machine or dedicated circuit, or collection or portion thereof, with processing capability such that it can execute instructions. A processor may be any kind of general purpose or dedicated processor, such as a CPU, GPU, NNA, System-on-chip, state machine, media processor, an application-specific integrated circuit (ASIC), a programmable logic array, a field-programmable gate array (FPGA), or the like. A computer or computer system may comprise one or more processors.

It is also intended to encompass software which defines a configuration of hardware as described herein, such as HDL (hardware description language) software, as is used for designing integrated circuits, or for configuring programmable chips, to carry out desired functions. That is, there may be provided a computer readable storage medium having encoded thereon computer readable program code in the form of an integrated circuit definition dataset that when processed (i.e., run) in an integrated circuit manufacturing system configures the system to manufacture a neural network accelerator described herein. An integrated circuit definition dataset may be, for example, an integrated circuit description.

Therefore, there may be provided a method of manufacturing, at an integrated circuit manufacturing system, a neural network accelerator as described herein. Furthermore, there may be provided an integrated circuit definition dataset that, when processed in an integrated circuit manufacturing system, causes the method of manufacturing a neural network accelerator to be performed.

An integrated circuit definition dataset may be in the form of computer code, for example as a netlist, code for configuring a programmable chip, as a hardware description language defining hardware suitable for manufacture in an integrated circuit at any level, including as register transfer level (RTL) code, as high-level circuit representations such as Verilog or VHDL, and as low-level circuit representations such as OASIS (RTM) and GDSII. Higher level representations which logically define hardware suitable for manufacture in an integrated circuit (such as RTL) may be processed at a computer system configured for generating a manufacturing definition of an integrated circuit in the context of a software environment comprising definitions of circuit elements and rules for combining those elements in order to generate the manufacturing definition of an integrated circuit so defined by the representation. As is typically the case with software executing at a computer system so as to define a machine, one or more intermediate user steps (e.g., providing commands, variables etc.) may be required in order for a computer system configured for generating a manufacturing definition of an integrated circuit to execute code defining an integrated circuit so as to generate the manufacturing definition of that integrated circuit.

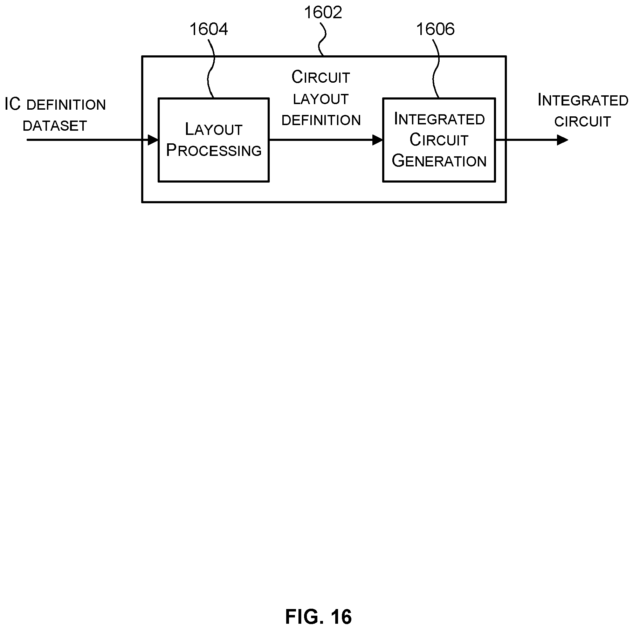

An example of processing an integrated circuit definition dataset at an integrated circuit manufacturing system so as to configure the system to manufacture a neural network accelerator will now be described with respect to FIG. 16.

FIG. 16 shows an example of an integrated circuit (IC) manufacturing system 1602 which is configured to manufacture a neural network accelerator as described in any of the examples herein. In particular, the IC manufacturing system 1602 comprises a layout processing system 1604 and an integrated circuit generation system 1606. The IC manufacturing system 1602 is configured to receive an IC definition dataset (e.g., defining a neural network accelerator as described in any of the examples herein), process the IC definition dataset, and generate an IC according to the IC definition dataset (e.g., which embodies a neural network accelerator as described in any of the examples herein). The processing of the IC definition dataset configures the IC manufacturing system 1602 to manufacture an integrated circuit embodying a neural network accelerator as described in any of the examples herein.

The layout processing system 1604 is configured to receive and process the IC definition dataset to determine a circuit layout. Methods of determining a circuit layout from an IC definition dataset are known in the art, and for example may involve synthesising RTL code to determine a gate level representation of a circuit to be generated, e.g., in terms of logical components (e.g., NAND, NOR, AND, OR, MUX and FLIP-FLOP components). A circuit layout can be determined from the gate level representation of the circuit by determining positional information for the logical components. This may be done automatically or with user involvement in order to optimise the circuit layout. When the layout processing system 1604 has determined the circuit layout it may output a circuit layout definition to the IC generation system 1606. A circuit layout definition may be, for example, a circuit layout description.

The IC generation system 1606 generates an IC according to the circuit layout definition, as is known in the art. For example, the IC generation system 1606 may implement a semiconductor device fabrication process to generate the IC, which may involve a multiple-step sequence of photo lithographic and chemical processing steps during which electronic circuits are gradually created on a wafer made of semiconducting material. The circuit layout definition may be in the form of a mask which can be used in a lithographic process for generating an IC according to the circuit definition. Alternatively, the circuit layout definition provided to the IC generation system 1606 may be in the form of computer-readable code which the IC generation system 1606 can use to form a suitable mask for use in generating an IC.

The different processes performed by the IC manufacturing system 1602 may be implemented all in one location, e.g., by one party. Alternatively, the IC manufacturing system 1602 may be a distributed system such that some of the processes may be performed at different locations, and may be performed by different parties. For example, some of the stages of: (i) synthesising RTL code representing the IC definition dataset to form a gate level representation of a circuit to be generated, (ii) generating a circuit layout based on the gate level representation, (iii) forming a mask in accordance with the circuit layout, and (iv) fabricating an integrated circuit using the mask, may be performed in different locations and/or by different parties.

In other examples, processing of the integrated circuit definition dataset at an integrated circuit manufacturing system may configure the system to manufacture a neural network accelerator without the IC definition dataset being processed so as to determine a circuit layout. For instance, an integrated circuit definition dataset may define the configuration of a reconfigurable processor, such as an FPGA, and the processing of that dataset may configure an IC manufacturing system to generate a reconfigurable processor having that defined configuration (e.g., by loading configuration data to the FPGA).

In some embodiments, an integrated circuit manufacturing definition dataset, when processed in an integrated circuit manufacturing system, may cause an integrated circuit manufacturing system to generate a device as described herein. For example, the configuration of an integrated circuit manufacturing system in the manner described above with respect to FIG. 16 by an integrated circuit manufacturing definition dataset may cause a device as described herein to be manufactured.

In some examples, an integrated circuit definition dataset could include software which runs on hardware defined at the dataset or in combination with hardware defined at the dataset. In the example shown in FIG. 16, the IC generation system may further be configured by an integrated circuit definition dataset to, on manufacturing an integrated circuit, load firmware onto that integrated circuit in accordance with program code defined at the integrated circuit definition dataset or otherwise provide program code with the integrated circuit for use with the integrated circuit.

The implementation of concepts set forth in this application in devices, apparatus, modules, and/or systems (as well as in methods implemented herein) may give rise to performance improvements when compared with known implementations. The performance improvements may include one or more of increased computational performance, reduced latency, increased throughput, and/or reduced power consumption. During manufacture of such devices, apparatus, modules, and systems (e.g., in integrated circuits) performance improvements can be traded-off against the physical implementation, thereby improving the method of manufacture. For example, a performance improvement may be traded against layout area, thereby matching the performance of a known implementation but using less silicon. This may be done, for example, by reusing functional blocks in a serialised fashion or sharing functional blocks between elements of the devices, apparatus, modules and/or systems. Conversely, concepts set forth in this application that give rise to improvements in the physical implementation of the devices, apparatus, modules, and systems (such as reduced silicon area) may be traded for improved performance. This may be done, for example, by manufacturing multiple instances of a module within a predefined area budget.

The applicant hereby discloses in isolation each individual feature described herein and any combination of two or more such features, to the extent that such features or combinations are capable of being carried out based on the present specification as a whole in the light of the common general knowledge of a person skilled in the art, irrespective of whether such features or combinations of features solve any problems disclosed herein. In view of the foregoing description, it will be evident to a person skilled in the art that various modifications may be made within the scope of the invention.

Table 5 provides a list of variables used in the present application.

Table 5

| Variable | Definition |
|---|---|
| $C_{in}$ | number of channels/planes of input tensor (=$P$) |
| $P$ | number of channels/planes of input tensor (=$C_{in}$) |
| $W$ | width or number of columns of input tensor (=$W_{in}$) |
| $H$ | height or number of rows of input tensor (=$H_{in}$) |
| $k$ | weight |
| $K_W$ | width or number of columns of convolutional kernel/filter |
| $K_H$ | height or number of rows of convolutional kernel/filter |
| $S_W$ | convolution stride in width/column/X direction = horizontal stride |
| $S_H$ | convolution stride in height/row/Y direction = vertical stride |
| $x$ | input data value |
| $N$ | number of batches |
| $y$ | output data value |
| $F$ | number of convolution filters ( $=C_{out}^{conv}$ ) |
| $C_{out}$ | number of channels or planes of the output tensor |
| $x'_{in}$ | input width/W/X split parameter = xin split parameter = number of input tensor columns per hardware pass |
| $x'_{out}$ | output width/W/X split parameter = xout split parameter = number of output tensor columns per hardware pass |
| $p'$ | input channel/plane/C split parameter = p-split parameter = number of columns/planes of input tensor per hardware pass |
| $y'$ | input height/H/Y split parameter = y-split parameter = number of input tensor rows per hardware pass |
| $f'$ | filter split parameter = number of filters per hardware pass |
| fsplits | number of f-splits |
| psplits | number of p-splits |
| xsplits | number of x-splits |
| $o'$ | execution order parameter |
| $I_i^A$ | main input tensor (input tensor A) interleave factor |
| $I_i^B$ | secondary input tensor (input tensor B) interleave factor |

(continued)

| Variable | Definition |
|---|---|
| $I_o$ | output tensor interleave factor |
| $R$ | number of inputs for convolution engine |
| $Ibuf$ | size of input buffer |
| $K_H^{pool}$ | height of pooling window |
| $Cbuf$ | size of coefficient buffer |
| $Sbuf$ | size of shared buffer |
| $B_i^{LA}$ | bandwidth to load the main input tensor (input tensor A) in the NNA for layer group L |
| $B_i^{LB}$ | bandwidth to load the secondary input tensor (input tensor B) in the NNA for layer group L |
| $B_c^L$ | bandwidth to load the filter kernel into the NNA for layer group L |
| $B_o^L$ | bandwidth to write the output tensor to memory for layer group $L$ |
| $B_{acc}^L$ | bandwidth to write data out from and into the accumulation buffer for layer group $L$ |
| $L$ | layer group |
| $W_{out}$ | width or number of columns of output tensor |
| $H_{out}$ | height or number of rows of output tensor |
| $C_{out}$ | number of channels/planes of the output tensor |
| $BS$ | burst size |
| $C_{out}^{conv}$ | number of channels/planes of the output tensor of a convolutional layer |
| $W_{out}^{conv}$ | width, or number of columns, of output tensor of a convolutional layer |
| $H_{out}^{conv}$ | height, or number of rows, of the output tensor of a convolutional layer |
| $P_w^-$ | convolutional layer - padding on the left |
| $P_w^+$ | convolutional layer - padding on the right |
| $D$ | size of input tensor |
| $BW$ | total bandwidth to execute a neural network on the NNA |
| $BW^L$ | total bandwidth to execute layer group L on the NNA (=$BW_{tot}$) |
| $E_c$ | number of cycles to execute a layer group on the NNA |
| $OP_{conv}$ | number of operations to execute a convolutional layer of a layer group |
| $OP_{act}$ | number of operations to execute an activation layer of a layer group |
| $OP_{pool}$ | number of operations to execute a pooling layer of a layer group |
| $OP_{eltwise}$ | number of operations to execute an element-wise operations layer of a layer group |
| $OP_{norm}$ | number of operations to execute a normalisation layer of a layer group |

(continued)

| Variable | Definition |
|---|---|
| $OP_{interlv}$ | number of operations to execute an output interleave layer of a layer group |
| $C_{in}^{conv}$ | number of channels/planes of the input tensor to a convolutional layer |
| $C_{in}^{eltwise}$ | number of channels/planes of the input tensor to an element-wise operations layer |
| $H_{out}^{eltwise}$ | height, or number of rows, of the output tensor of an element-wise operations layer |
| $W_{out}^{eltwise}$ | width, or number of columns, of the output tensor of an element-wise operations layer |
| $C_{in}^{act}$ | number of channels/planes of the input tensor to an activation layer |
| $H_{out}^{act}$ | height, or number of rows, of the output tensor of an activation layer |
| $W_{out}^{act}$ | width, or number of columns, of the output tensor of an activation layer |
| $C_{in}^{pool}$ | number of channels/planes of the input tensor to a pooling layer |
| $H_{out}^{pool}$ | height, or number of rows, of the output tensor of a pooling layer |
| $W_{out}^{pool}$ | width, or number of columns, of the output tensor of a pooling layer |
| $K_{W}^{pool}$ | width of pooling window |
| $OP_{tot}$ | total number of operations for a layer group |
| $BW_{tot}$ | total bandwidth to execute a layer group on the NNA ($=BW^{L}$) |
| $freq$ | frequency under which the NNA operates |
| $DDR$ | double data rate |
| $O_{mac}$ | number of operations that can be performed per cycle by a convolution engine |
| $C_{eng}$ | number of convolution engines |
| $E_{C}^{conv}$ | number of cycles to execute the convolution operations for a layer group of the NNA |
| $E_{C}^{eltwise}$ | number of cycles to execute the element-wise operations for a layer group on the NNA |
| $E_{C}^{pool}$ | number of cycles to execute the pooling operations for a layer group on the NNA |
| $E_{C}^{act}$ | number of cycles to execute the activation operations for a layer group on the NNA |

**Claims**

1. A computer-implemented method (600) of dividing a neural network comprising one or more layers into chunks of operations executable in a hardware pass of hardware configurable to execute a neural network, the one or more layers of the neural network being divisible into one or more layer groups that comprise a sequence of layers executable in a same hardware pass of the hardware, each layer group being divisible into one or more chunks of operations executable in a hardware pass of the hardware, the one or more chunks for a layer group defined by one or more split parameters, the method (600) comprising:

obtaining a layer group loss function that represents a performance metric associated with executing a layer group on the hardware as a function of the one or more split parameters and one or more neural network architecture parameters for the layer group (602);

generating a neural network loss function based on the layer group loss function that represents the performance metric associated with executing the neural network on the hardware (604); and

selecting the split parameters for the one or more layer groups that minimize the neural network loss function under one or more constraints imposed by the hardware (606).

2. The method (600) of claim 1, wherein the performance metric associated with executing a layer group on the hardware is a number of cycles to execute the layer group on the hardware.

3. The method (600) of claim 2, wherein the layer group loss function is a ratio of (i) a total number of operations to execute the layer group on the hardware, and (ii) a maximum attainable number of operations performed by the hardware per cycle for the layer group.

4. The method (600) of claim 3, wherein the maximum attainable number of operations performed by the hardware per cycle for a layer group is dependent on whether the layer group is bandwidth bound or computation bound, and the determination of whether the layer group is bandwidth bound or computation bound is based on a roofline model.

5. The method (600) of claim 1, wherein the performance metric associated with executing a layer group on the hardware is a total bandwidth to transfer data into and out of the hardware to execute the layer group.

6. The method (600) of any preceding claim, wherein each layer group receives one or more inputs, and the one or more split parameters for a layer group comprise at least one parameter that defines a split of one of the one or more inputs in a dimension of that input.

7. The method (600) of claim 6, wherein the one or more split parameters for a layer group comprise at least two parameters that define a split of one of the one or more inputs in a dimension of that input, and a parameter that defines an order that the splits of the one or more inputs are processed.

8. The method (600) of any preceding claim, wherein the hardware comprises one or more buffers for storing data input to and/or generated by the hardware, and the one or more constraints imposed by the hardware are based on a size of one or more of the one or more buffers.

9. The method (600) of any preceding claim, wherein each layer group is configured to receive an input tensor defined by a width, a height and a number of channels and the one or more split parameters for a layer group comprise an input interleave value that defines a number of channels of the input tensor that are stored together in an interleaved manner.

10. The method (600) of claim 9, wherein the hardware supports one or more input interleave values for the input tensor and the one or more constraints imposed by the hardware comprises a constraint that the input interleave value is one of the one or more supported input interleave values.

11. The method (600) of any preceding claim, wherein each layer group is configured to generate an output tensor defined by a width, a height and a number of channels and the one or more split parameters for a layer group comprise an output interleave value that defines a number of channels of the output tensor that are stored together in an interleaved manner.

12. The method (600) of claim 11, wherein the hardware supports one or more output interleave values for the output tensor and the one or more constraints imposed by the hardware comprises a constraint that the output interleave value is one of the one or more supported output interleave values.

13. The method (600) of any preceding claim, wherein the hardware comprises a neural network accelerator.

14. The method (600) of any preceding claim, further comprising causing the hardware to execute the neural network in the chunks identified by the selected split parameters for the one or more layer groups (612).

15. A computer readable storage medium having stored thereon computer readable instructions that, when executed at a computer system, cause the computer system to perform the method of any preceding claim.

FIG. 1

**FIG. 2**

FIG. 3

FIG. 4

EP 4 300 369 A1

**FIG. 5**

EP 4 300 369 A1

600

602

OBTAIN LAYER GROUP LOSS
FUNCTION

604

GENERATE NEURAL
NETWORK LOSS FUNCTION
BASED ON LAYER GROUP
LOSS FUNCTION

606

SELECT SPLIT PARAMETERS
FOR LAYER GROUPS THAT
MINIMIZE THE NEURAL
NETWORK LOSS FUNCTION

608

OUTPUT SELECTED SPLIT
PARAMETERS

610

GENERATE INSTRUCTIONS
WHICH CAUSE THE NEURAL
NETWORK TO BE EXECUTED
VIA CHUNKS

612

CAUSE NEURAL NETWORK
ACCELERATOR TO EXECUTE
NEURAL NETWORK IN
CHUNKS

**FIG. 6**

FIG. 7

**FIG. 8**

Layer 1:
Previous Method -> Horizonal (No Split) format
Method of FIG. 6 -> (No Split) Format – PFX order

| Scenario | W | x'out | Cin | p' | Cout | f' | Input Interlv | Output Interlv | twinops |
|---|---|---|---|---|---|---|---|---|---|
| Previous Method | 28 | 14 | 52 | 52 | 52 | 52 | 4 | 4 | True |
| Method of FIG. 6 | 28 | 14 | 52 | 64 | 52 | 64 | 4 | 64 | True |

Layer 2:
Previous Method -> Horizonal (F) format
Method of FIG. 6 -> (F) Format – XPF order

| Scenario | W | x'out | Cin | p' | Cout | f' | Input Interlv | Output Interlv | twinops |
|---|---|---|---|---|---|---|---|---|---|
| Previous Method | 14 | 14 | 52 | 52 | 512 | 256 | 4 | 128 | True |
| Method of FIG. 6 | 14 | 14 | 52 | 52 | 512 | 256 | 64 | 64 | True |

Layer 3:
Previous Method -> Horizonal (PF) format
Method of FIG. 6 -> (PF) Format – XPF order

| Scenario | W | x'out | Cin | p' | Cout | f' | Input Interlv | Output Interlv | twinops |
|---|---|---|---|---|---|---|---|---|---|
| Previous Method | 14 | 14 | 512 | 256 | 512 | 48 | 128 | 16 | True |
| Method of FIG. 6 | 14 | 14 | 512 | 256 | 512 | 32 | 64 | 16 | True |

FIG. 9

LOGLOG PLOT: FREQ = 800 MH AND DDR = 20.48 GB/s

TeraMAC/sec

ARITHMETIC INTENSITY [OPERATION PER BYTE]

**FIG. 10**

**Layer 1:**
Previous Method -> Horizonal (No Split) format
Method of FIG. 6 -> (No Split) Format – PFX order

| Scenario | W | x'out | Cin | p' | Cout | f' | Input Interlv | Output Interlv | twinops |
|---|---|---|---|---|---|---|---|---|---|
| Previous Method | 196 | 196 | 10 | 10 | 30 | 30 | 1 | 32 | True |
| Method of FIG. 6 | 196 | 196 | 10 | 10 | 30 | 32 | 16 | 32 | True |

**Layer 2:**
Previous Method -> Horizonal (No Split) format
Method of FIG. 6 -> (No Split) Format – XPF order

| Scenario | W | x'out | Cin | p' | Cout | f' | Input Interlv | Output Interlv | twinops |
|---|---|---|---|---|---|---|---|---|---|
| Previous Method | 196 | 98 | 30 | 32 | 40 | 48 | 32 | 16 | True |
| Method of FIG. 6 | 196 | 98 | 30 | 30 | 40 | 48 | 32 | 16 | True |

**Layer 3:**
Previous Method -> Horizonal (No Split) format
Method of FIG. 6 -> (F) Format – XPF order

| Scenario | W | x'out | Cin | p' | Cout | f' | Input Interlv | Output Interlv | twinops |
|---|---|---|---|---|---|---|---|---|---|
| Previous Method | 98 | 98 | 40 | 48 | 50 | 50 | 16 | 64 | True |
| Method of FIG. 6 | 98 | 98 | 40 | 40 | 50 | 25 | 16 | 1 | True |

**Layer 4:**
Previous Method -> Horizonal (F) format
Method of FIG. 6 -> (XF) Format – XPF order

| Scenario | W | x'out | Cin | p' | Cout | f' | Input Interlv | Output Interlv | twinops |
|---|---|---|---|---|---|---|---|---|---|
| Previous Method | 98 | 96 | 50 | 64 | 600 | 200 | 64 | 4 | True |
| Method of FIG. 6 | 98 | 32 | 50 | 51 | 600 | 120 | 1 | 4 | True |

**FIG. 11**

45

LOGLOG PLOT: FREQ = 800 MH AND DDR = 20.48 GB/s

ARITHMETIC INTENSITY [OPERATION PER BYTE]

FIG. 12

EP 4 300 369 A1

FIG. 13

**FIG. 14**

EP 4 300 369 A1

1502          1504

CPU          GPU

1514

DISPLAY          1516

SPEAKERS          1518

1522

CAMERA          1520

MEMORY          NNA

1506          1508

**FIG. 15**

1602

1604

1606

IC DEFINITION
DATASET

CIRCUIT
LAYOUT
DEFINITION

INTEGRATED
CIRCUIT

LAYOUT
PROCESSING

INTEGRATED
CIRCUIT
GENERATION

**FIG. 16**

| | Europäisches Patentamt European Patent Office Office européen des brevets | **EUROPEAN SEARCH REPORT** | **Application Number** EP 23 18 2435 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | SUNNY SHINE PAREKKADAN ET AL: "Reinforcement Learning based Efficient Mapping of DNN Models onto Accelerators", 2022 IEEE SYMPOSIUM IN LOW-POWER AND HIGH-SPEED CHIPS (COOL CHIPS), IEEE, 20 April 2022 (2022-04-20), pages 1-6, XP034123731, DOI: 10.1109/COOLCHIPS54332.2022.9772673 * the whole document * | 1-15 | INV. G06N3/063 G06N3/045 G06N3/0464 G06N3/048 |
| X | YIN SHOUYI ET AL: "Parana: A Parallel Neural Architecture Considering Thermal Problem of 3D Stacked Memory", IEEE TRANSACTIONS ON PARALLEL AND DISTRIBUTED SYSTEMS, IEEE, USA, vol. 30, no. 1, 1 January 2019 (2019-01-01), pages 146-160, XP011700096, ISSN: 1045-9219, DOI: 10.1109/TPDS.2018.2858230 [retrieved on 2018-12-10] * the whole document * | 1-15 | |
| X | US 2019/087718 A1 (MARTIN CHRIS [GB] ET AL) 21 March 2019 (2019-03-21) * the whole document * | 1-15 | TECHNICAL FIELDS SEARCHED (IPC) G06N |

The present search report has been drawn up for all claims

| Place of search | Date of completion of the search | Examiner |
|---|---|---|
| The Hague | 13 November 2023 | Hasnas, Sergiu |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

**EP 23 18 2435**

This annex lists the patent family members relating to the patent documents cited in the above-mentioned European search report.
The members are as contained in the European Patent Office EDP file on
The European Patent Office is in no way liable for these particulars which are merely given for the purpose of information.

**13-11-2023**

| Patent document cited in search report | | Publication date | Patent family member(s) | | Publication date |
|---|---|---|---|---|---|
| US 2019087718 | A1 | 21-03-2019 | CN | 109635916 A | 16-04-2019 |
| | | | EP | 3460726 A1 | 27-03-2019 |
| | | | GB | 2566702 A | 27-03-2019 |
| | | | US | 2019087718 A1 | 21-03-2019 |

EPO FORM P0459

For more details about this annex : see Official Journal of the European Patent Office, No. 12/82

**REFERENCES CITED IN THE DESCRIPTION**

**Patent documents cited in the description**

- GB 2209584 A
- GB 2552242 A
- GB 2566702 A